# EUROPEAN PATENT SPECIFICATION

(11) **EP 4 288 489 B1**
(45) Date of publication and mention of the grant of the patent: **05.11.2025**
(21) Application number: 22750277.0
(22) Date of filing: 02.02.2022
(51) Int. Cl.: C08F 290/06, C08L 63/00, C09D 163/00, C09D 155/00, C09D 151/08, C08G 59/62

(54) **CROSSLINKABLE ACRYLIC-MODIFIED EPOXY COATING COMPOSITION**
VERNETZBARE ACRYLMODIFIZIERTE EPOXIDBESCHICHTUNGSZUSAMMENSETZUNG
COMPOSITION DE REVÊTEMENT ÉPOXY MODIFIÉE PAR DE L'ACRYLIQUE POUVANT ÊTRE RÉTICULÉ

(30) Priority: 03.02.2021 US 202163145024 P
(43) Date of publication of application: 13.12.2023
(73) Proprietor: Arkema, Inc., King of Prussia, PA 19406 (US)
(72) Inventor: YANG, Lei, King of Prussia, Pennsylvania 19406-1308 (US); KIM, Kyu-Jun, King of Prussia, Pennsylvania 19406-1308 (US); SCHNEIDER, Jeffrey A., King of Prussia, Pennsylvania 19406-1308 (US); WU, Wenjun, King of Prussia, Pennsylvania 19406-1308 (US); CAO, Jinbao, King of Prussia, Pennsylvania 19406-1308 (US)
(74) Representative: Arkema Patent
(86) International application number: PCT/US2022/014828
(87) International publication number: WO 2022/169796

(56) References cited:
- JP-A- 2001 278 923
- JP-A- 2008 013 601
- US-A- 5 342 864
- US-A1- 2012 315 388
- US-B1- 6 187 833
- US-B2- 7 358 294
- US-B2- 7 868 066

## Description

### FIELD OF THE INVENTION

The invention relates to waterborne dispersions including crosslinkable multistage polymeric particles useful in coating compositions. The multistage particles have a last-formed layer that includes diketone functionality capable of crosslinking via a dihydrazide component also included in the dispersion. The invention is also related to a second embodiment waterborne dispersion that, in addition to the multistage particles, further includes crosslinkable latex particles having a diketone functionality capable of crosslinking with each other and/or the multistage particles via the dihydrazide component. The invention also relates to polymerization processes for forming the multistage particles. The invention further relates to coating compositions that contain embodiments of the waterborne dispersions.

### BACKGROUND

Water-based coatings have been widely used in modern industry due to their low volatile organic compound (VOC) content and ease of application. Among many coating properties, block resistance, defined as the ability of a coating to avoid detrimental adhesion between two surfaces, *i*.*e*., to not stick to itself or another surface upon contact when pressure is applied, is needed for water-based coatings to be useful in numerous coating applications.

Epoxy-based polymers have been used for coating applications because of their hardness, toughness, excellent adhesion, and chemical resistance. In order to comply with the environmental VOC regulation, water-based epoxy coating compositions have been produced through three synthesis steps; 1) reaction of epoxy polymer with fatty acid to form epoxy ester; 2) radical polymerization of ethylenic monomers in the presence of epoxy ester; and 3) dispersing the acrylic modified epoxy ester in water by neutralization of carboxylic groups with a base. The resulting acrylic modified epoxy ester dispersions may be surfactant-free and are able to achieve excellent film formation at low temperature with relatively low VOC content. However, such acrylic-modified epoxy ester dispersions may lack block resistance and therefore are inadequate for many coating applications where block resistance is required. Paint blocking is an undesirable phenomenon often encountered in the coatings industry. Paint blocking occurs when two painted/coated surfaces contact each other and when separated, they stick to each other, causing damage to the surfaces upon separation. Therefore, good block resistance is needed for acrylic modified epoxy ester dispersions used as binders in such coatings.

The present invention relates to compositions including novel epoxy-based waterborne dispersions that show excellent block resistance while maintaining good hardness, low water uptake, and high dirt pick-up resistance. The present invention also relates to compositions that further include non-epoxy-based emulsion polymers to improve the block resistance, hardness, and dirt pick-up resistance of coating compositions.

US 4212781 describes an acrylic modified epoxy coating composition produced by the radical polymerization of the ethylenically unsaturated monomers including carboxylic acid functional monomer(s) at about 110°C to 120°C in the presence of at least 3 wt% of benzoyl peroxide. The resulting product may form stable dispersion in a basic aqueous medium.

US 4296011 discloses a composition of water-soluble epoxy ester copolymers. Low molecular weight polyepoxide was first reacted with monocarboxylic acid. The resulting hydroxyl functionalized epoxy esters was poly-esterified with mono-ethylenically unsaturated dicarboxylic acids and subsequently radically co-polymerized with mono-ethylenic monomers.

US 4377433 describes a water borne coating composition comprising blends of (1) a copolymer of vinyl or acrylic monomers and ethylenically unsaturated monomers containing hydroxyl or carboxyl functional groups; (2) an epoxy compound; (3) a polyamine hardener. The latex polymer is not substantially crosslinkable with epoxy compound.

US 4619952 describes a coating composition comprises a blend of a latex polymer containing acid group and an amine-functionalized epoxy that is partially amidated with a polycarboxylic acid. The amine functionalized epoxy was prepared by reacting polyepoxide resin with amines or ammonia, followed by reacting with a carboxylic acid anhydride or a functional equivalent. The latex polymer is not substantially crosslinkable with the amine-functionalized epoxy polymer.

US 5196481 teaches a low VOC coating composition comprising a blend of acrylic-modified epoxy dispersions, latex polymers, and a polymeric surfactant. The acrylic-modified epoxy dispersions are not substantially crosslinkable with latex polymers.

US 5342864 describes a process of making a high molecular weight epoxy emulsion. A mixture of low molecular weight epoxy polymers and difunctional phenols were first emulsified in water using surfactants, followed by reacting at about 105 °C under pressure above 5 psi in the presence of hydroxide or tertiary amine catalysts to produce high molecular weight epoxy emulsions. The product may be further polymerized with acrylic monomers that contain carboxyl functional monomers by emulsion polymerization to form epoxy/acrylic blend emulsions.

US 5464885A describes a process of producing a low VOC, storage-stable, acrylic-modified epoxy ester dispersions by first esterifying the low molecular weight epoxy resins with ethylenically unsaturated carboxyl terminated polyesters to produce water dispersed epoxy esters, followed by the radical polymerization of the epoxy esters with ethylenically unsaturated monomers.

US 5830952 discloses a water-dispersible acrylic modified epoxy polymer. The epoxy polymer was first reacted with a compound containing epoxy reactive group and conjugated carbon-carbon double bonds or a carbon-carbon triple bond. The obtained product was copolymerized with acrylic monomers that contain carboxyl terminated monomers to produce water-dispersible acrylic modified epoxy polymer.

US 6008273A describes a waterborne coating composition comprising epoxy resins, water dispersible acrylic resins, a fugitive base, and an aqueous carrier. The coating composition was produced by reacting epoxy resins with a blend of ethylenically unsaturated carboxylic acid and vinyl or acrylic monomers at about 125°C, followed by dispersing the product into water with a basic compound.

US 7868066 describes an aqueous dispersion coating composition comprising a modified epoxy resin that is formed from the reaction between rosin and a dienophile carboxylic acid, followed by further reaction with epoxy compounds.

EP 0398577 describes a coating composition comprising a blend of (1) crosslinking agents; (2) acrylic polymer containing functional groups reactive with the crosslinking agents; (3) impact modifiers. The preferred crosslinking agents are the emulsified epoxy resins or the reactive surfactants containing epoxy functionality.

There remains a need for epoxy-based waterborne dispersions of crosslinkable multi-stage polymeric particles capable of producing coating compositions that have the desired combination of block resistance, hardness, water resistance, and dirt pick up resistance.

Likewise, there remains a need for a relatively low VOC coating composition in which acrylic-modified epoxy polymers are crosslinkable with latex polymers through a crosslinking agent at ambient conditions which provide improved block resistance.

### SUMMARY

A first embodiment of the invention relates to crosslinkable multi-stage epoxy-acrylic diketone-modified particles in the form of a water-borne dispersion useful as a polymeric binder for coating applications. The particles are modified with a diketone functionality, and are capable of crosslinking with each other through a dihydrazide component/compound upon application to the substrate with subsequent evaporation of volatiles in the coating. The invention also relates to another embodiment that further includes non-epoxy-based emulsion particles that also are modified with a diketone functionality. Both embodiments of the waterborne dispersions include a component having a dihydrazide functionality and also including at least one water soluble base. The component having the dihydrazide functionality allows both types of particles having the diketone functionality to crosslink with each other, or with others of the same type of particle.

The invention also provides for methods to form the multistage epoxy-acrylic diketone-modified particles. The invention further provides coating compositions including either embodiment of the waterborne dispersions.

A first embodiment water-borne dispersion including: A) polymeric multi-stage diketone-functionalized particles; B) at least one water-soluble base; C) at least one component comprising a dihydrazide functionality; and D) water is provided.

The A) polymeric multi-stage diketone-functionalized epoxy-acrylic particles includes at least three stages, a), b) and c). The a) first-formed stage includes, as polymerized monomers: i) at least one epoxy compound comprising at least two epoxy groups, and ii) at least one polyol. The epoxy groups of i) are present in a stoichiometric excess to the hydroxyl groups of ii). The b) second-formed stage includes iii) at least one fatty acid comprising at least one carbon-carbon double bond, and an optional rosin which may or may not be polymerizable. The c) third-formed stage includes, as polymerized monomers: iv) at least one ethylenically unsaturated monomer containing a carboxylic acid group, different from iii); v) at least one ethylenically unsaturated monomer not containing a carboxylic acid group; and vi) at least one ethylenically unsaturated monomer containing a diketone group.

According to a second embodiment, the waterborne dispersion may further include E) polymeric diketone-functionalized particles different from polymeric multi-stage particles A). These particles E) are present in the waterborne dispersion as emulsified particles (or latex). The particles E) include, as polymerized monomers: vii) at least one ethylenically unsaturated monomer, and viii) at least one ethylenically unsaturated monomer containing a diketone group. This second embodiment waterborne dispersion may further include a surfactant, or the particles E) may optionally include, as a polymerized monomer, a free-radical polymerizable surfactant. Preferably, if the particles E) in the second embodiment waterborne dispersion do not include surfactant monomers polymerized therein, the second embodiment waterborne dispersion itself includes a surfactant as a separate component.

Also provided is a method for forming the waterborne dispersion including the multi-stage diketone-functionalized epoxy-acrylic polymeric particles. The method includes the steps of:
1) Combining i) an epoxy compound that includes at least two epoxy groups, and ii) a polyol to form a first monomer mixture. The epoxy groups of i) are in present in a stoichiometric excess to the hydroxyl groups of ii).
2) Initiating a reaction of the first monomer mixture to form a first polymeric stage.
3) Combining the first polymeric stage, and iii) at least one fatty acid that includes at least one carbon-carbon double bond to form a second monomer mixture.
4) Initiating a reaction of the second monomer mixture to form a second polymeric stage.
5) Combining iv) at least one ethylenically unsaturated monomer containing a carboxylic acid group, this monomer being different from the monomer iii); v) at least one ethylenically unsaturated monomer not containing a carboxylic acid group; vi) at least one ethylenically unsaturated monomer containing a diketone group; and the second polymeric stage to form a third monomer mixture.
6) Initiating a reaction of the third monomer mixture to form a diketone-functionalized epoxy acrylic polymer.
7) Adding water and water-soluble base(s) to the diketone-functionalized epoxy acrylic polymer to form the diketone-functionalized epoxy acrylic polymeric particles.
8) Combining the diketone functionalized epoxy acrylic particles with at least one component comprising a dihydrazide functionality to form the waterborne dispersion including the diketone functionalized epoxy acrylic particles.

Notably these diketone-functionalized epoxy acrylic particles are only formed after the water and base are added.

According to a second embodiment, the method may further include a step:
9) Adding polymeric diketone-functionalized particles different from the diketone functionalized epoxy acrylic particles. These polymeric diketone-functionalized particles include, as polymerized monomers vii) at least one ethylenically unsaturated monomer, and viii) at least one ethylenically unsaturated monomer containing a diketone group.

Also provided is a coating composition including the first embodiment waterborne emulsion including the A) multi-stage diketone functionalized polymeric particles and at least one additive. A coating composition comprising the second embodiment waterborne emulsion including the A) multi-stage diketone functionalized polymeric particles and the E) polymeric diketone-functionalized particles different from polymeric multi-stage particles A) and at least one additive is also provided.

These dispersions are expected to be especially useful in coating applications requiring excellent block resistance, high hardness, good water resistance, good dirt pick-up resistance, and low VOC content, such as architectural and floor coatings. Further areas of applicability will become apparent from the description provided herein.

### BRIEF DESCRIPTION OF THE DRAWING

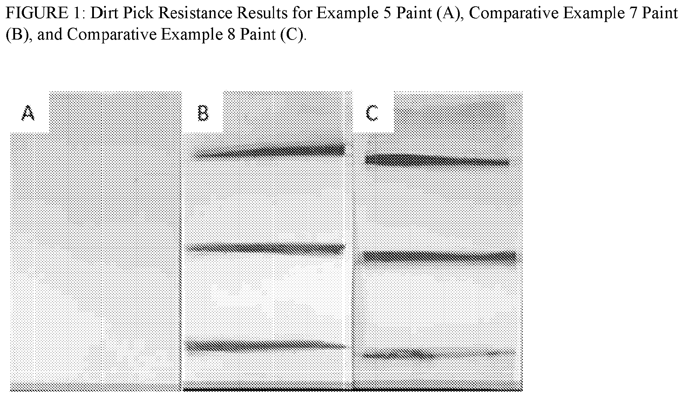

Figure 1 shows the dirt pick-up resistance of certain coating compositions. Figure 1 shows dirt pick-up resistance results for Example 5 Paint (A), Comparative Example 7 Paint (B), and Comparative Example 8 Paint (C).

### DETAILED DESCRIPTION

The multi-stage polymeric particles made and used in coating compositions according to the present invention are described in conjunction with a coating composition in order to more fully illustrate the multi-stage polymeric particles and the uses thereof.

As described above, a first embodiment of the invention relates to multi-stage crosslinkable multistage epoxy-acrylic diketone-modified polymeric particles in the form of a water-borne dispersion useful as a polymeric binder for coating applications. The polymeric particles are modified with a diketone functionality, and are capable of crosslinking with each other through a dihydrazide component after all the volatiles are evaporated from the dispersion. The invention also relates to another embodiment that further includes non-epoxy-based emulsion particles that also are modified with a diketone functionality. Both embodiments of the waterborne dispersions include a component having a dihydrazide functionality and also including at least one water soluble base. The component having the dihydrazide functionality which is present in the dispersion as an additive allows both types of particles having the diketone functionality to crosslink with each other, or with others of the same type of particles after all the volatiles are evaporated from the dispersion. As used herein, the term, "component" is understood to be synonymous with, and to include compounds and mixtures of compounds.

A first embodiment water-borne dispersion including: A) polymeric multi-stage diketone-functionalized particles; B) at least one water-soluble base; C) at least one component comprising a dihydrazide functionality; and D) water is provided.

The A) polymeric multi-stage diketone-functionalized particles includes at least three stages, a), b) and c). The a) first-formed stage includes, as polymerized monomers: i) at least one epoxy compound comprising at least two epoxy groups, and ii) at least one polyol. The epoxy groups of i) are present in a stoichiometric excess to the hydroxyl groups of ii). The b) second-formed stage includes iii) at least one fatty acid comprising at least one carbon-carbon double bond and optional rosin which may or may not be polymerizable. The c) third-formed stage includes, as polymerized monomers: iv) at least one ethylenically unsaturated monomer containing a carboxylic acid group, different from iii); v) at least one ethylenically unsaturated monomer not containing a carboxylic acid group; and vi) at least one ethylenically unsaturated monomer containing at least one diketone group.

According to a second embodiment, the waterborne dispersion may further include E) polymeric diketone-functionalized particles different from polymeric multi-stage particles A). These particles E) are present in the waterborne dispersion as emulsified particles (or latex, as is known in the art). The particles E) include as polymerized monomers: vii) at least one ethylenically unsaturated monomer, and viii) at least one ethylenically unsaturated monomer containing at least one diketone group. This second embodiment waterborne dispersion may further include a surfactant as a separate component, or the particles E) may include, as a polymerized monomer, a polymerizable surfactant. Preferably, the second embodiment waterborne dispersion includes surfactant, either as a separate component of the dispersion, or the surfactant may be present in the particles E) as a polymerized monomer. Typically, a surfactant is included in the reactor during the preparation of the emulsion particles E).

### A) Polymeric multi-stage diketone-functionalized particles

The polymeric multi-stage diketone-functionalized particles include at least three stages, a), b) and c). According to some embodiments, these particles may be considered to be core-shell particles in which the outer shell includes the last-formed stage that includes diketone functionality. According to some embodiments this shell is the c) third formed stage. The inner core thus includes the earlier-formed stages. For example, the inner core may include the a) first-formed stage and the b) second formed stage. The a) first-formed stage includes, as polymerized monomers: i) at least one epoxy compound comprising at least two epoxy groups, and ii) at least one polyol. The epoxy groups of i) are present in a stoichiometric excess to the hydroxyl groups of ii). The b) second-formed stage includes iii) at least one fatty acid comprising at least one carbon-carbon double bond, and an optional rosin. The c) third-formed stage includes, as polymerized monomers: iv) at least one ethylenically unsaturated monomer containing a carboxylic acid group, different from iii); v) at least one ethylenically unsaturated monomer not containing a carboxylic acid group; and vi) at least one ethylenically unsaturated monomer containing at least one diketone group.

The polymeric multi-stage diketone-functionalized particles A) may be included in the waterborne dispersion at a level of from 10-70 wt% of the dispersion. The polymeric multi-stage diketone-functionalized particles A) are preferably included at from 20-60 wt% or more preferably at from 30-50 wt% or most preferably at from 35-45 wt% of the dispersion.

The polymeric multi-stage diketone-functionalized particles A) may have a volume average particle size of from 10 to 500 nm. The volume average particle size of the polymeric multi-stage diketone-functionalized particles A) may preferably be from 50 to 400 nm, more preferably from 60 to 350 nm, and most preferably from 70 to 300 nm.

The A) polymeric multi-stage diketone-functionalized particles may have a weight average molecular weight (Mw) of from 100 to 500,000 Da as measured by GPC chromatography using polystyrene standards. The Mw of the A) polymeric multi-stage diketone-functionalized particles may be from 1000 to 500,000 Da, preferably from 2000 to 200,000 Da, more preferably from 3000 Da to 100,000 Da or most preferably from 3500 to 80,000 Da.

### i) Epoxy compounds including at least two epoxy groups

Non-limiting examples of i) epoxy compounds including at least two epoxy groups are bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, trimethyol propane triglycidyl ether, pentaerythritol tetraglycidyl ether, trimethyol ethane triglycidyl ether, ethylene glycol diglycidyl ether, sorbitol glycidyl ethers, 2-methyl-1,3-propane diol diglycidyl ether, neopentyl glycol diglycidyl ether, 2,2,4-trimethyl pentanediol diglycidyl ether, propylene glycol diglycidyl ether, hydrogenated bisphenol A diglycidyl ether, 1,4-butanediol diglycidyl ether, 1,6-hexanediol diglycidyl ether, polyethylene glycol diglycidyl ether, polypropylene glycol diglycidyl ether, and mixtures thereof. Aromatic epoxy compounds are preferred. More preferred are bisphenol A diglycidyl ether, bisphenol A propoxylate diglycidyl ether, bisphenol F diglycidyl ether and mixtures thereof. Most preferred are bisphenol A diglycidyl ether, bisphenol F diglycidyl ether, and mixtures thereof.

The i) epoxy compounds may be present in the particles A) at a level of from 5-60 wt% based on the total dry weight of the A) polymeric multi-stage diketone-functionalized particles. The i) epoxy compound may preferably be present at from 15-60 wt% of the total dry weight of the A) polymeric multi-stage diketone-functionalized particles, more preferably at from 20-55 wt% or most preferably at from 25-50 wt%.

### ii) Polyols

The epoxy groups of i) are preferably present in the first-formed stage of the particles A) in a stoichiometric excess to the hydroxyl groups of ii). The molar ratio of the epoxy groups in i) to the hydroxyl groups of ii) may preferably be from 1.1:1 to 10 :1, more preferably from 1.2:1 to 5:1 and most preferably from 1.5:1 to 3.0:1.

The ii) polyol may be present in the particles A) at a level of from 5-40 wt% based on the total dry weight of the A) polymeric multi-stage diketone-functionalized particles. Preferably, the ii) polyol is present at from 5-30 wt%, more preferably at from 5-25 wt% and most preferably at from 7-20 wt%.

Non-limiting examples of the polyol ii) are bisphenol A, bisphenol F, bisphenol S, brominated bisphenol A, brominated bisphenol F, brominated bisphenol S, trimethyol propane, pentaerythritol, trimethyol ethane, ethylene glycol, sorbitol, 2-methyl 1,3-propane diol, neopentyl glycol, 2,2,4-trimethyl pentanediol, propylene glycol, hydrogenated bisphenol A, 1,4-butanediol, 1,6-hexanediol, 1,4-cyclohexyl dimethanol, 1,10-decanediol, 1,12-dodecanediol, polyethylene glycol, polypropylene glycol, pentaerythitrol, dipentaerythritol, neopentyl glycol, trimethylol propane, triethylol propane, trimethylol ethane and mixtures thereof. Aromatic hydroxy compounds are preferred. The most preferred polyols are bisphenol A, bisphenol F, bisphenol S or mixtures thereof.

### iii) Fatty acids including at least one carbon-carbon double bond

Non-limiting examples of suitable fatty acids including at least one carbon-carbon double bond present in the multistage polymeric particles A) are linolenic acid, linoleic acid, dehydrated castor fatty acid, safflower fatty acid, sunflower fatty acid, tall oil fatty acid, linseed fatty acid, soybean oil fatty acid, conjugated linoleic acid, tung oil fatty acid, fatty acids are available from Eastman Chemical under the tradename Pamolyn^{™}. Non- limiting examples include Pamolyn^{™} 100 FKG Kosher oleic acid; Pamolyn^{™} 125 oleic acid; Pamolyn^{™} 150 fatty acid; Pamolyn^{™} 200 linoleic acid; Pamolyn^{™} 210 linoleic acid; Pamolyn^{™} 240 fatty acid; Pamolyn^{™} 300 fatty acid; Pamolyn^{™} 237B fatty acid; Pamolyn^{™} 347 fatty acid; Pamolyn^{™} 380 conjugated linoleic acid; , and mixtures thereof. Preferred are linoleic acid, dehydrated castor fatty acid, safflower fatty acid, sunflower fatty acid, tall oil fatty acid, linseed fatty acid, soybean oil fatty acid, conjugated linoleic acid, tung oil fatty acid, Pamolyn^{™} 200 linoleic acid, Pamolyn^{™} 210 linoleic acid, Pamolyn^{™} 240 fatty acid, Pamolyn^{™} 300 conjugated linoleic acid, Pamolyn^{™} 347 fatty acid, Pamolyn^{™} 380 conjugated linoleic acid, and mixtures thereof. More preferred are linolenic acid, linoleic acid, dehydrated castor fatty acid, safflower fatty acid, sunflower fatty acid, tall oil fatty acid, linseed fatty acid, soybean oil fatty acid, Pamolyn^{™} 200 linoleic acid, Pamolyn^{™} 210 linoleic acid, Pamolyn^{™} 300 conjugated linoleic acid, Pamolyn^{™} 347 fatty acid, Pamolyn^{™} 380 fatty acid, and mixtures thereof. Most preferred are dehydrated castor fatty acid, sunflower fatty acid, tall oil fatty acid, linseed fatty acid, soybean oil fatty acid, Pamolyn^{™} 200 linoleic acid, Pamolyn^{™} 210 linoleic acid, Pamolyn^{™} 300 conjugated linoleic acid, and mixtures thereof.

The iii) fatty acids may be present in the particles A),based on the total dry weight of the A) polymeric multi-stage diketone-functionalized particles, at a level of from 5 to 40 wt%, preferably from 5 to 35 wt%, more preferably at from 5 to 30 wt% , or most preferably at from 5 to 25 wt% .

According to some embodiments, the multistage polymeric particles A) may optionally further include a rosin, that if present, is added with the fatty acids iii). At least a portion of the rosin may be polymerizable into the particles A). A rosin useful for the present invention is a material extracted from certain pine trees that includes abietic acid as a major component. If present, the rosin may be included at from 0.1%-30 wt%, preferably, 1% to 25 wt%, more preferably 5%- 20 wt% or most preferably from 7%-15 wt% based on the total dry weight of the A) polymeric multi-stage diketone-functionalized epoxy acrylic polymeric particles A) and is added with the iii) fatty acids including a least one carbon-carbon double bond during the preparation of the particles A).

### iv) Ethylenically unsaturated monomer containing a carboxylic acid group, different from iii)

Non-limiting examples of suitable ethylenically unsaturated monomers containing a carboxylic acid group, different from iii) are: acrylic acid, methacrylic acid, acryloxy propionic acid, crotonic acid, fumaric acid, maleic acid, itaconic acid, and mixtures thereof. Preferred are acrylic acid, methacrylic acid, itaconic acid, and mixtures thereof. More preferred are acrylic acid, methacrylic acid, and mixtures thereof. Most preferred is acrylic acid.

The iv) ethylenically unsaturated monomers containing a carboxylic acid group, different from iii) may be present in the particles A) at a level of from 1-15 wt% based on the total dry weight of the A) polymeric multi-stage diketone-functionalized particles. The iv) ethylenically unsaturated monomers containing a carboxylic acid group may preferably be present at from 1 to 10 wt%, more preferably at from 2 to 8 wt%, or most preferably at from 3 to 7 wt% based on the total dry weight of the A) polymeric multi-stage diketone-functionalized particles.

### v) Ethylenically unsaturated monomer not containing a carboxylic acid group,

The v) ethylenically unsaturated monomers not containing a carboxylic acid group may be selected from vinyl aromatic monomers, alkyl acrylate monomers, acrylamides, alkyl acrylamides, acrylonitrile, vinyl cyanides, silane monomers, ureido monomers, wet adhesion monomers, and mixtures thereof. Non-limiting examples of suitable ethylenically unsaturated monomers not containing a carboxylic acid group are: styrene, vinyl toluene, isobutyl (meth)acrylate, t-butyl(meth)acrylate, ethyl (meth)acrylate, butyl (meth)acrylate, hexyl (meth)acrylate, 2-ethylhexyl acrylate, isooctyl acrylate, isodecyl acrylate, lauryl acrylate, 2-hydroxyethyl acrylate, 2-hydroxypropyl acrylate, 2-hydroxyethyl methacrylate, 2-hydroxypropyl methacrylate, 2-(2-oxo-1-imidazolidinyl)ethyl methacrylate, methyl (meth)acrylate, ethyl (meth)acrylate, n-propyl (meth)acrylate, isopropyl (meth)acrylate, n-butyl (meth)acrylate, isobutyl (meth)acrylate, pentyl (meth)acrylate, 2-ethylhexyl (meth)acrylate, decyl (meth)acrylate, dodecyl (meth)acrylate, and stearyl (meth)acrylate, vinyl acetate, vinyl propionate, vinyl butyrate, vinyl valerate, vinyl 2-ethylhexylacrylate, vinyl isononanoate, vinyl laurate, vinyl stearate, vinyl versatate, as aminoethyl acrylate and methacrylate, dimethylaminopropyl acrylate and methacrylate, 3-dimethylamino-2,2-dimethylpropyl-1-acrylate and methacrylate, 2-N-morpholinoethyl acrylate and methacrylate, 2-N-piperidinoethyl acrylate and methacrylate, N-(3-dimethylaminopropyl) acrylamide and methacrylamide, N-(3-dimethylamino-2, 2-dimethylpropyl) acrylamide and methacrylamide, N-dimethylaminomethyl acrylamide and methacrylamide, N-dimethylaminomethyl acrylamide and methacrylamide, N-(4-morpholinomethyl) acrylamide and methacrylamide, vinylimidazole, vinylpyrrolidone, N-(2-methacryloyloxyethyl) ethylene urea, N-(2-methacryloxyacetamidoethyl)-N,N'-ethyleneurea, allylalkyl ethylene urea, N-methacrylamidomethyl urea, N-methacryoyl urea, N-[3-(1,3-diazacyclohexan)-2-on-propyl] methyacrylamide, 2-(1-imidazolyl)ethyl methacrylate, 2-(1-imidazolidin-2-on)ethyl methacrylate, N-(methacrylamido)ethyl ethylene urea (Sipomer^{®} WAM II, Rhodia), allyl ureido wet adhesion monomer (Sipomer^{®} WAM, Rhodia), (meth)acrylonitrile, cyclohexyl (meth)acrylate, and mixtures thereof. Preferred are (meth)acrylate monomers; vinyl aromatic monomers, such as styrene; ethylenically unsaturated monomers such as butadiene; vinyl ester monomers, such as vinyl acetate and mixtures thereof. More preferred are styrene, vinyl toluene, methyl (meth)acrylate, ethyl (meth)acrylate, butyl methacrylate, isobutyl (meth)acrylate, ethyl acrylate, butyl acrylate, hexyl acrylate, 2-ethylhexyl acrylate, isooctyl acrylate, isodecyl acrylate, lauryl acrylate, 2-hydroxyethyl acrylate, 2-hydroxypropyl acrylate, 2-hydroxyethyl methacrylate, and 2-hydroxypropyl methacrylate, and mixtures thereof. Most preferred are: isobutyl methacrylate, vinyl toluene, and mixtures thereof.

The v) ethylenically unsaturated monomers not containing a carboxylic acid group may be present in the particles A) at a level of from 5-40 wt% based on the total dry weight of the A) polymeric multi-stage diketone-functionalized particles. Preferably, the v) ethylenically unsaturated monomers not containing a carboxylic acid group are present at from 10-30 wt%, more preferably at from 10-25 wt%, or most preferably at from 13-21 wt% based on the total dry weight of the A) polymeric multi-stage diketone-functionalized particles.

### vi) Ethylenically unsaturated monomer containing a diketone group;

Non-limiting examples of suitable ethylenically unsaturated monomers containing a diketone group are: diacetone acrylamide, diacetone methacrylamide, and mixtures thereof.

The vi) ethylenically unsaturated monomers containing a diketone group may be present in the particles A) at a level of from 0.1-30 wt% based on the total dry weight of the A) polymeric multi-stage diketone-functionalized particles. The vi) ethylenically unsaturated monomers containing a diketone group may preferably be present in the particles A) at a level of from 1-20 wt%, more preferably at a level of from 2-15 wt%, or most preferably at a level of from 3-10 wt% based on the total dry weight of the A) polymeric multi-stage diketone-functionalized particles.

### B) Water-soluble base

Non-limiting examples of the water soluble base are ammonium hydroxide, triethyl amine, N,N-dimethyl ethanol amine, n-morpholine, n-methyl morpholine, lithium hydroxide, sodium hydroxide, potassium hydroxide, and mixtures thereof. Preferred bases are: ammonium hydroxide, sodium hydroxide, potassium hydroxide, and mixtures thereof.

The base B) may be present in the dispersion in an amount to provide a pH of from 7 to 13, preferably 7.5-12, more preferably 8-11, still more preferably 8-10, and most preferably 8.5-9.5.

The base B) may be present in the dispersion at from 0.1-10 wt% of the dispersion, preferably from 0.2-5 wt%; more preferably from 0.5-2 wt%, or most preferably at from 1-1.5 wt% of the water-borne dispersion of crosslinkable multistage polymeric particles. Without being bound to any theory, the base may serve the purpose of maintaining the particles A) as a stable dispersion of particles in water.

### C) Component including a dihydrazide functionality

Non-limiting examples of the component including a dihydrazide functionality are adipic acid dihydrazide, succinic dihydrazide, pimelic acid dihydrazide, ethylmalonic dihydrazide, valine dihydrazide, isophthalic dihydrazide, and mixtures thereof. Preferred are adipic acid dihydrazide, succinic dihydrazide, and mixtures thereof. Most preferred is adipic acid dihydrazide.

The component including a dihydrazide functionality may be present in the dispersion at a level of from 0.1 to 15 wt%, or preferably from 0.2 to 10 wt%, more preferably from 0.5 to 5 wt%, or most preferably from 0.5-2 wt% of the waterborne dispersion of crosslinkable multistage polymeric particles.

### D) Water

The water may be present in the waterborne dispersion of crosslinkable multistage polymeric particles at a level of, for example, from 5-89.4 wt%, or from 40-80 wt%.

### E) Polymeric diketone-functionalized particles different from particles A)

In some embodiments, the waterborne dispersion may further include E) polymeric particles. These polymeric particles E) are different from the multi-stage, or core-shell particles A). They are present in the waterborne dispersion as emulsified particles and they have diketone functionality that allows them to crosslink with other particles E) in the waterborne dispersion, or the multistage particles A) or both types of particles A) and E), via the dihydrazide component C).

These polymeric particles E) include, as polymerized monomers: vii) at least one ethylenically unsaturated monomer, and viii) at least one ethylenically unsaturated monomer containing a diketone group. The embodiment including the polymeric particles E) may include a surfactant as a separate component, i.e., not polymerized into the particles E). Optionally, the particles E) may include ix) a polymerizable surfactant as polymerized monomers. The monomer vii) may be the same or different from monomers iv) and v) included in the particles A). The monomer viii) may be the same of different from the monomer vi) included in the particles A). The polymeric particles E) may further include, as polymerized monomers, ix) at least one polymerizable surfactant monomer.

If present, these polymeric particles E) may be present in the waterborne dispersion at from 20 to 70 wt% of the waterborne dispersion. A preferred range is from 30 to 60 wt%, more preferred range is from 35 to 55 wt%, and most preferred range is from 40 to 50 wt% of the waterborne dispersion.

If the particles E) are present in the waterborne dispersion, the amounts of the remaining components of the waterborne dispersion may be adjusted accordingly. For example, the A) the polymeric multi-stage diketone-functionalized particles may be included at from 0.1-30 wt% of the dispersion, or preferably from 1-20 wt%, more preferably from 1-15 wt% and most preferably from 1-10 wt% of the waterborne dispersion. The at least one water-soluble base B) may be present in the waterborne dispersion that includes the particles E) in an amount to provide a pH of from 7-13, preferably 7.5-12, more preferably 8-11, still more preferably 8-10, and most preferably 8.5-9.5.

Further, the polymeric particles E) different from particles A) may be particles selected from homogeneous particles, or structured as core-shell particles, or combinations thereof. The term "homogenous" as used in relation to the particles E), means that the diketone functionality is found throughout the particle, although not necessarily uniformly throughout the particles E). The term, "core-shell," in reference to the particles E), means that the diketone functionality is found predominately on the exterior thereof, *i.e.,* the exterior of the particles E) includes a higher molar percent of diketone functionality than an interior of the particles E) These different morphologies may be achieved by manipulating monomer feed profiles or mixtures thereof during preparation of the particles E). A surfactant is used during the preparation of the particles E).

The base B) may be present in the dispersion at from 0.01-5 wt% of the dispersion, preferably from 0.05-2 wt%; more preferably from 0.05-0.5 wt%, or most preferably at from 0.05-0.15 wt% of the dispersion. The at least one substance comprising a dihydrazide functionality C) may be included in the dispersion containing the particles E) from 0.1-5 wt%, or preferably from 0.1-2 wt%, more preferably from 0.1-1 wt%, or most preferably from 0.2-0.6 wt% of the waterborne dispersion.

The water D) may be present in the embodiment of the waterborne dispersion containing the particles E) at from 5-79.4 wt%, or from 40-70 wt%.

The particles E) may have a volume average particles size of from 50-500 nm, as measured by dynamic light scattering, preferably from 55- 400 nm, more preferably from 60-300 nm, or most preferably from 70-250 nm.

The waterborne dispersion including the particles E) may include up to 10 wt% based on the weight of Particle E) of at least one surfactant as a separate component, meaning it is not polymerized into the particles E). Suitable surfactants or emulsifying agents may include anionic, cationic, and nonionic emulsifiers customarily used in emulsion polymerization, including mixtures of different emulsifiers. For example, at least one anionic emulsifier in combination with one or more nonionic emulsifiers may be used. Representative anionic emulsifiers may include the alkyl aryl sulfonates, alkali metal alkyl sulfates, the sulfonated alkyl esters, ethoxylated alcohol C8-C16 sulfates, ethoxylated alcohol C10-C16 half ester of sulfosuccinates, and fatty acid soaps. Specific examples may include sodium dodecylbenzene sulfonate, sodium butylnaphthalene sulfonate, sodium lauryl sulfate, disodium dodecyl diphenyl ether disulfonate, N-octadecyl disodium sulfosuccinate and dioctyl sodium sulfosuccinate. The emulsifying agents may be employed in amounts necessary to achieve adequate emulsification and a stable dispersion of the polymeric particles E).

### vii) Ethylenically unsaturated monomer

The vii) ethylenically unsaturated monomer may be present in the particles E) at from 80-99.9 wt%, on a dry basis of the particles E). The vii) ethylenically unsaturated monomer may preferably be present at from 70- 95 wt%, more preferably from 75-90 wt%, or most preferably from 80-90 wt% of the particles E). The vii) ethylenically unsaturated monomer present in the particles E) may or may not include a carboxylic acid functionality. These monomers vii) may be the same or different from the monomers iv) and v) included in the particles A).

These monomers vii) may be selected from vinyl aromatic monomers, (meth)acrylic acid, alkyl acrylate monomers, acrylamides, alkyl acrylamides, acrylonitrile, vinyl cyanides, silane monomers, ureido monomers, wet adhesion monomers, and mixtures thereof. Non-limiting examples of suitable such monomers vii) are methacrylic acid, acrylic acid, styrene, vinyl toluene, isobutyl (meth)acrylate, t-butyl (meth) acrylate, ethyl acrylate, butyl acrylate, hexyl(meth) acrylate, 2-ethylhexyl acrylate, isooctyl acrylate, isodecyl acrylate, lauryl acrylate, 2-hydroxyethyl acrylate, 2-hydroxypropyl acrylate, 2-hydroxyethyl methacrylate, 2-hydroxypropyl methacrylate, 2-(2-oxo-1-imidazolidinyl)ethyl methacrylate, methyl (meth)acrylate, ethyl (meth)acrylate, n-propyl (meth)acrylate, isopropyl (meth)acrylate, n-butyl (meth)acrylate, isobutyl (meth)acrylate, pentyl (meth)acrylate, 2-ethylhexyl (meth)acrylate, decyl (meth)acrylate, dodecyl (meth)acrylate, stearyl (meth)acrylate, vinyl acetate, vinyl propionate, vinyl butyrate, vinyl valerate, vinyl 2-ethylhexylacrylate, vinyl isononanoate, vinyl laurate, vinyl stearate, vinyl versatate, aminoethyl acrylate and methacrylate, dimethylaminopropyl acrylate and methacrylate, 3-dimethylamino-2,2-dimethylpropyl-1-acrylate and methacrylate, 2-N-morpholinoethyl acrylate and methacrylate, 2-N-piperidinoethyl acrylate and methacrylate, N-(3-dimethylaminopropyl) acrylamide and methacrylamide, N-(3-dimethylamino-2, 2-dimethylpropyl) acrylamide and methacrylamide, N-dimethylaminomethyl acrylamide and methacrylamide, N-dimethylaminomethyl acrylamide and methacrylamide, N-(4-morpholino-methyl) acrylamide and methacrylamide, vinylimidazole, vinylpyrrolidone, N-(2-methacryloyloxyethyl) ethylene urea, N-(2-methacryloxyacetamidoethyl)-N,N'-ethyleneurea, allylalkyl ethylene urea, N-methacrylamidomethyl urea, N-methacryoyl urea, N-[3-(1,3-diazacyclohexan)-2-on-propyl] methyacrylamide, 2-(1-imidazolyl) ethyl methacrylate, 2-(1-imidazolidin-2-on)ethylmethacrylate, N-(methacrylamido)ethyl ethylene urea (Sipomer^{®} WAM II, Rhodia), allyl ureido wet adhesion monomer (Sipomer^{®} WAM, Rhodia), (meth)acrylonitrile, cyclohexyl(meth)acrylate, and mixtures thereof.

Emulsion polymers and monomers useful to prepare polymeric emulsions or dispersions are known in the art (as discussed in texts on the subject such as "Emulsion Polymerization: Theory and Practice" by D. C. Blackley published by Wiley in 1975, "Emulsion Polymerization" by F. A. Bovey et al. published by Interscience Publishers in 1965, and "Emulsion Polymerization and Emulsion Polymers" by P.A. Lovell et al. published by Wiley Science in 1997).

Preferred monomers vii) are methacrylic acid, acrylic acid, styrene, vinyl toluene, isobutyl (meth)acrylate, t-butyl (meth) acrylate, ethyl acrylate, butyl acrylate, hexyl (meth)acrylate, 2-ethylhexyl acrylate, 2-hydroxyethyl acrylate, 2-hydroxypropyl acrylate, 2-hydroxyethyl methacrylate, 2-hydroxypropyl methacrylate, 2-(2-oxo-1-imidazolidinyl ethyl methacrylate, methyl (meth)acrylate, ethyl (meth)acrylate, n-propyl (meth)acrylate, isopropyl (meth)acrylate, n-butyl (meth)acrylate, isobutyl (meth)acrylate, stearyl (meth)acrylate, vinyl acetate, vinyl propionate, vinyl 2-ethylhexyl acrylate, vinyl isononanoate, vinyl laurate, vinyl stearate, vinyl versatate, dimethylaminopropyl acrylate and methacrylate, 3-dimethylamino-2,2-dimethylpropyl-1-acrylate and methacrylate, 2-N-morpholinoethyl acrylate and methacrylate, 2-N-piperidinoethyl acrylate and methacrylate, and mixtures thereof.

More preferred monomers vii) are methacrylic acid, acrylic acid, styrene, ethyl acrylate, butyl acrylate, 2-ethylhexyl acrylate, 2-(2-oxo-1-imidazolidinyl) ethyl methacrylate, methyl (meth)acrylate, and mixture thereof.

Most preferred monomers vii) are butyl acrylate, methyl methacrylate, 2-(2-oxo-1-imidazolidinyl)ethyl methacrylate, methacrylic acid, and mixtures thereof.

### viii) Ethylenically unsaturated monomer containing a diketone group

The ethylenically unsaturated monomer containing a diketone group may be present in the particles E) at from 0.1-20 wt% on a dry basis of the particles E). The viii) ethylenically unsaturated monomer containing a diketone group may preferably be present at from 0.5-10 wt%, more preferably from 1-5 wt%, and most preferably from 1-3 wt% on a dry basis of the particles E).

Non-limiting examples of suitable such monomers are diacetone acrylamide, diacetonemethacrylamide, mixtures thereof, and the like.

### ix) Polymerizable surfactant monomer

As noted above, the polymeric particles E) may optionally include, as a polymerized monomer, a polymerizable surfactant monomer. If present, these surfactant monomers ix) may be present in the particles E) at from 0.01-10 wt% by weight of the particles E). Preferably the monomers ix) are present at from 0.05-8 wt%, more preferably at from 0.1-6 wt% and most preferably at from 0.15-5wt% by weight of the particles E).

Non-limiting examples of suitable polymerizable surfactant monomers may be selected from: polyoxyethylene styrenated phenyl ether ammonium sulfates, sodium alpha olefin sulfonates, monomers according to Formulas II, III, IV, and mixtures thereof. 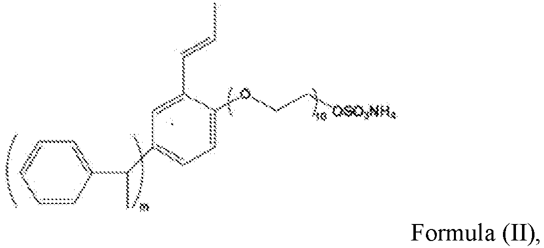 where m is an integer from 1 to 30, 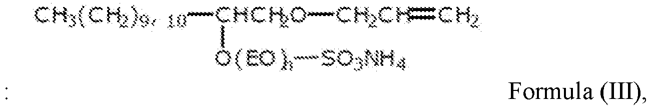 where n is an integer from 1 to 30, 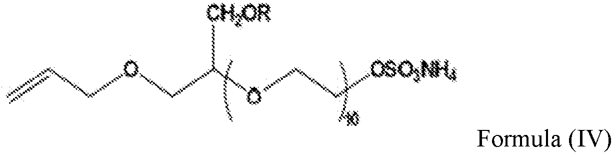 where R is a branched C10 alkyl group or bicycloheptane.

According to some embodiments, Formulas II and IV are preferred. Most preferred is Formula II.

### Applications

The waterborne dispersions of the present invention may be applied by conventional techniques, such as dipping, brushing, flowing, or spraying onto a variety of substrate surfaces. The substrates may include without limitation, wood, fabricated wood, paper, cardboard, textiles, synthetic resins, ceramics, ferrous metals, non-ferrous metals, stone, concrete, plaster, and the like.

The waterborne dispersions of the present invention may be used in indoor or outdoor applications. Useful applications may include, without limitation, garage floor coating, metal coating, rail car coating, agricultural machinery coating, automobile parts coating, log cabin coatings, deck stains, concrete coating, wood stains, porch and deck stains, glossy top coats, traffic paints, kitchen cabinetry coatings, automobile refinish, lawn and garden equipment coatings, bus and truck top coatings, gloss trim enamels, metal primers, light duty maintenance coatings, furniture coatings, stain blocking coatings, appliance coatings, dumpster coatings, heavy duty equipment coatings, industrial equipment coatings, and sash and trim enamels.

The waterborne dispersions of the present invention may also be useful for adhesive and ink applications.

The coating compositions may be formulated into paints of various colors when pigment is included. The coating composition may form a film on a substrate with or without the aid of coalescing agents when applied on the substrate at ambient conditions.

### Additives

Non-limiting examples of additives that may be included in coating compositions that include either embodiment, *i.e.,* with or without the particles E), of the present waterborne dispersion are: pigments, tints, emulsifiers, rheology control additives, additional polymers, pigments or colorants, fillers, dispersants or surfactants, plasticizers, defoamers, thickeners, biocides, solvents, rheology modifiers, wetting or spreading agents, leveling agents, conductive additives, thermal insulating fillers, adhesion promoters, anti-blocking agents, anti-cratering agents or anti-crawling agents, corrosion inhibitors, anti-static agents, flame retardants, optical brighteners, UV absorbers or other light stabilizers, antioxidants, chelating agents, flattening agents, flocculants, humectants, insecticides, lubricants, odorants, oils, waxes or anti-slip aids, soil repellants, freeze-thaw and/or open time additives, and stain resistant agents.

Non-limiting examples of pigments that can act as colorants, fillers or dyes include but are not limited to: carbon black, colored organic pigments, and metal oxide pigments, such as titanium dioxide, zinc oxide, clay, aluminum silicate, zinc oxide, zinc hydroxide, aluminum silicate, magnesium silicate, calcium silicate, amorphous silica, vapor phase silica, colloidal silica, alumina, aluminum hydroxide, zirconium oxide, and cerium oxide, as well as calcium carbonate, magnesium carbonate, kaolin, clay, talc, calcium sulfate, barium sulfate, and zinc carbonate.

### Production methods

Also provided is a method for forming the waterborne dispersion including the multi-stage diketone-functionalized epoxy-acrylic particles A). The method includes the steps of:
1) Combining i) an epoxy compound that includes at least two epoxy groups, and ii) a polyol to form a first monomer mixture. The epoxy groups of i) are in present in a stoichiometric excess to the hydroxyl groups of ii).
2) Initiating a reaction of the first monomer mixture to form a first polymeric stage.
3) Combining the first polymeric compound, and iii) at least one fatty acid that includes at least one carbon-carbon double bond to form a second monomer mixture.
4) Initiating a reaction of the second monomer mixture to form a second polymeric stage.
5) Combining iv) at least one ethylenically unsaturated monomer containing a carboxylic acid group, this monomer being different from the monomer iii); v) at least one ethylenically unsaturated monomer not containing a carboxylic acid group; vi) at least one ethylenically unsaturated monomer containing a diketone group; and the second polymeric stage to form a third monomer mixture.
6) Initiating a reaction of the third monomer mixture to form a diketone-functionalized epoxy acrylic polymer.
7) Adding D) water and B) water-soluble base(s) to the diketone functionalized epoxy acrylic polymer to form the diketone-functionalized epoxy acrylic polymeric particles A).
8) Combining the diketone functionalized epoxy acrylic particles A) with at least one component C) comprising a dihydrazide functionality to form the waterborne dispersion including the diketone functionalized epoxy acrylic particles.

The initiating step may be performed by heating the reactants to an elevated temperature, or by adding a chemical initiator, or a combination of both. According to certain embodiments, the reaction of the monomer mixtures of steps 2), 4) or 6) may be initiated by heating the monomer mixture to an elevated temperature, such as 70°C, or 85°C or 100°C or higher. According to other embodiments, the steps 2), 4),and/or 6) may include a step of allowing the monomer mixture of steps 2), 4) and/or 6) to exceed 100°C during the reaction of the monomer mixtures.

According to another embodiment, the step 6) may include a step of cooling the diketone-functionalized particles A) to 100°C or less. According to another embodiment, a solvent may be added to the second polymeric stage in step 5). Non-limiting examples of suitable solvents include n-butoxy ethanol, n-methoxy ethanol, diethylene glycol n-butyl ether, diethylene glycol methyl ether, n-propxy propanol, n-butoxy propanol, dipropylene glycol methyl ether, 2,2,4-trimethyl-1,3-pentanediol monoisobutyrate, dipropylene glycol n-butyl ether, dipropylene glycol propyl ether, and 1-methyl-2-pyrrolidinone.

According to certain embodiments, the steps 2) 4) and/or 6) may be performed by including a chemical initiator. Non-limiting examples of chemical initiators used in steps 2), 4) and/or 6) may be selected from 2,2-azobisisobutyronitrile, 1,1-azobiscyclohexane carbonitrile, t-butyl peroxy benzoate, t-butyl peroctoate, di-t-amyl peroxide, di-t-butyl peroxide, t-butyl peroxybenzoate, benzoyl peroxide, and mixtures thereof.

According to another embodiment, the method may include a further step 9) of adding E) polymeric diketone-functionalized particles different from the diketone functionalized epoxy acrylic particles A). These polymeric diketone-functionalized particles E) include, as polymerized monomers vii) at least one ethylenically unsaturated monomer, and viii) at least one ethylenically unsaturated monomer containing a diketone group.

According to another embodiment, the method may also be performed as follows.
1a) Combining i) an epoxy compound that includes at least two epoxy groups, and ii) a polyol and heating to form a first polymeric stage. The epoxy groups of i) are in present in a stoichiometric excess to the hydroxyl groups of ii).
2a) Combining iii) at least one fatty acid that includes at least one carbon-carbon double bond and optional rosin with the first polymeric stage, and heating to form a second polymeric stage.
3a) Adding optional solvent(s).
4a) Mixing iv) at least one ethylenically unsaturated monomer containing a carboxylic acid group, this monomer being different form the monomer iii); v) at least one ethylenically unsaturated monomer not containing a carboxylic acid group; and vi) at least one ethylenically unsaturated monomer containing a diketone group.
5a) Concurrently feeding an initiator and the monomer mixture from step 4a) to a reactor vessel containing the second polymeric stage or optional solvent at temperatures of 70°C or higher to effect a polymerization reaction and allowing a reactor vessel temperature to rise to above 100°C to form a third polymer.
6a) Cooling the reactor vessel temperature to below100°C or less.
7a) Adding D) water and B) water-soluble base(s) to the reactor vessel.
8a) Combining the diketone functionalized epoxy acrylic particles A) with at least one component C) comprising a dihydrazide functionality to form the waterborne dispersion including the diketone functionalized epoxy acrylic particles.

According to another embodiment, the method may include a further step 9a) of adding E) polymeric diketone-functionalized particles different from the diketone functionalized epoxy acrylic particles A). These polymeric diketone-functionalized particles E) include, as polymerized monomers vii) at least one ethylenically unsaturated monomer, and viii) at least one ethylenically unsaturated monomer containing a diketone group.

Exemplary initiators useful in step 5a) include, but are not limited to, 2,2-azobisisobutyronitrile, 1,1-azobiscyclohexane carbonitrile, t-butyl peroxy benzoate, t-butyl peroctoate, di-t-amyl peroxide, di-t-butyl peroxide, t-butyl peroxybenzoate, benzoyl peroxide, and mixtures thereof.

Optional solvents useful in step 3a) include, but are not limited to n-butoxy ethanol, n-methoxy ethanol, diethylene glycol n-butyl ether, diethylene glycol methyl ether, n-propoxy propanol, n-butoxy propanol, dipropylene glycol methyl ether, 2,2,4-trimethyl-1,3-pentanediol monoisobutyrate, dipropylene glycol n-butyl ether, dipropylene glycol propyl ether, and 1-methyl-2-pyrrolidinone, and mixtures thereof.

### EXAMPLES

### Measurement Methods:

Paint hardness was measured according to ASTM D 4366 (2014). The paint films were prepared on Leneta^{®} black scrub test panel using a 10-mil drawdown bar and allowed to dry for 7 days at 77°F and 73.5 ± 3. °F and the relative humidity of 50±5 % for 7 days. The corresponding hardness was referred as 7 day Konig hardness.

Paint block resistance was tested according to a modified ASTM D-4946 (2017). The paints were applied on the Leneta^{®} 1B opacity charts using a 3-mil Bird bar and dried for 1 day at 77°F (25°C) and 7 days at 73.5 ± 3.5°F (23 ± 2°C) and relative humidity of 50±5 % for 7 days. The corresponding block resistance measurement was referred as 1 day- and 7 day- block resistance, respectively. For the room temperature block resistance test, the modified test was performed as follows: Two square strips of 2.54 cm x 2.54 cm were placed with two paint films facing each other under a load of 454-grams. After 24 hours, the strips were separated and rated according to ASTM D-4946 (2017). For the elevated temperature (i.e., 120 °F or 50°C) block resistance test (as modified), two square strips of 2.54 cm x 2.54 cm were placed with two paint films facing each other under a load of 1000 grams in a 120°F (50°C) oven. After 30 minutes, the films were allowed to cool for 30 minutes at room temperature. The strips were then separated and rated according to ASTM D-4946 (2017). The rating is the average value of triplicate testing.

For the dirt pickup resistance, 10 mil wet paint films were applied to Leneta^{®} white scrub test panels using a drawdown bar and dried at 73.5 ± 3.52°F (23 ± 2°C) and relative humidity of 50±5 % for 7 days. The dried films were then stained with a red iron oxide slurry and allowed to dry for two hours and then washed off with a sponge and water using 30 cycles in a standard scrub machine. A color-guide 6805 colorimeter (BYK Gardner) was used to record L, a, and b values before and after testing. The values of ΔE denoting color change were calculated from changes of L, a, b values as follows ΔE= [(ΔL)² + (Δa)² + (Δb)²]^{1/2}. For water uptake measurement, a paint film was drawn down using a 20 mil draw down bar on a Leneta^{®} black scrub test panel and cut to a size of 11.25 inch x 4 inch to achieve about 4 g of paint solids on the panel. After drying at a temperature of 73.5 ± 3.52°F (23 ± 2°C) and the relative humidity of 50 ± 5% for 3 days, the film was soaked in water for an hour followed by wiping out excess water using paper towels.

The water uptake is the percentage of water absorbed in the panel after soaking in water with respect to the mass of the panel before soaking in water.

The weight average molecular weight was measured on Gel Permeation Chromatography equipped with five Agilent PL gel columns arranged in series (the column pore sizes are 10E5, 10E4, 10E3, 500A, and 100A, respectively). Tetrahydrofuran was used as a carrier solvent, and polystyrene polymers with molecular weight from 500 to 6,000,000 Daltons were used as calibration standards.

The volume average particle size of the multi-stage epoxy acrylate diketone-functionalized particles and of the polymeric diketone-functionalized particles was measured using dynamic light scattering using a Microtrac UPA 150 or Nanotrac UPA 150 manufactured by Microtrac.

The pH measurements were carried out using an Oakton pH 150 Waterproof Portable Meter under room temperature (*i.e.,* 25 °C).

This first set of Examples and Comparative Examples demonstrates coating compositions including just the multi-stage epoxy acrylate diketone-functionalized particles as crosslinkable particles, *i.e.,* the first embodiment waterborne dispersion.

### Example 1 (Of the Invention): Synthesis of Dispersion of Diketone-Modified Epoxy-Acrylic Multi-Stage Particles A)

The components shown in Table 1 were reacted as follows to prepare a dispersion of the polymeric multi-stage epoxy based diketone-functionalized particles.

| Table 1: Example 1 components | | | | |
|---|---|---|---|---|
| Charge | Ingredients | Grams | Wt% of stage (dry) | Wt% total (dry) |
| A | Bisphenol A diglycidyl ether | 276 | 76.9 | 32.6 |
| | Bisphenol A | 83 | 23.1 | 9.8 |
| | Ethyltriphenyl phosphonium iodide | 0.3 | - | - |
| B | Rosin | 80 | 33.3 | 9.5 |
| | Pamolyn^{™} 200 (Eastman) | 80 | 33.3 | 9.5 |
| | Dehydrated castor oil fatty acid | 80 | 33.3 | 9.5 |
| | Sodium acetate | 0.2 | - | - |
| | Sodium carbonate | 0.06 | - | - |
| C | n-propoxy propanol (solvent) | 90 | - | - |
| D | Vinyl toluene | 90 | 36.4 | 10.6 |
| | isobutyl methacrylate | 55 | 22.3 | 6.5 |
| | Diacetone acrylamide | 60 | 24.3 | 7.1 |
| | Acrylic acid | 42 | 17.9 | 5.0 |
| | di-tert-amyl peroxide | 6 | - | - |
| E | 28% ammonium hydroxide | 28 | - | - |
| | D.I. water | 1225 | - | - |

Charge A was added to a flask equipped with a cold water condenser and nitrogen blanket and heated to 135 .2°C. A rapid temperature rise was noted due to heat generated by the reaction. When the temperature returned to 135°C, Charge B was added to a flask and the temperature was gradually raised to 230.2°C. The temperature was hold until the acid value is 1.84. The flask was cooled to 140°C and Charge (C) was added. At 140°C, Charge (D) was fed into a flask over a period of about 1.5 hours.

After holding at 140°C for 2.5 hours after the addition of Charge (D) is completed, the flask was cooled to below 100°C and Charge (E) was added. The batch was cooled to ambient temperature after mixing at 80°C. The final dispersions have nonvolatile content of 37.9%, pH value of 8.59, Brookfield viscosity of 560 centipoises at 25°C, volume average particle size of 80.4 nm and acid value of 14.6.

### Example 2 (Of the Invention). Preparation of a Crosslinkable Coating Composition

The ingredients shown in Table 2 were combined as described below to prepare a single component crosslinkable coating composition.

| Table 2: Example 2 coating composition | | |
|---|---|---|
| Charge | Ingredient | Grams |
| A | Adipic acid dihydrazide | 7 |
| B | D.I. Water | 30 |
| C | Diketone-modified epoxy dispersion of Example 1 (37.9 % solids by weight) | 600 |

Charge A and Charge B were mixed in a beaker and heated to 80 °C with a mild agitation until the mixture became clear. The prepared solution was blended with Charge C with the agitation of 300 rpm for 30 minutes. The final coating composition has a nonvolatile content of 36.9, pH value of 8.51, and Brookfield viscosity of 200 centipoises at 25°C.

### Comparative Example 1. Synthesis of Diketone-Free Epoxy-Acrylic Dispersion of Particles

The components shown in Table 3 were reacted as described below to prepare a dispersion of the polymeric multi-stage particles that do not include diketone-functionality.

| Table 3: Comparative Example 1 components | | | | |
|---|---|---|---|---|
| Charge | Ingredients | Grams | Wt% of stage (dry) | Wt% total (dry) |
| A | Bisphenol A diglycidyl ether (aromatic epoxy monomer) | 552 | 76.9 | 34.9 |
| | Bisphenol A (co-monomer) | 166 | 23.1 | 10.5 |
| | Ethyltriphenyl phosphonium iodide (initiator) | 0.6 | - | - |
| B | Rosin | 160 | 33.3 | 10.1 |
| | Pamolyn^{™} 200 (linoleic acid; Eastman) | 160 | 33.3 | 10.1 |
| | Dehydrated castor oil fatty acid | 160 | 33.3 | 10.1 |
| | Sodium acetate | 0.4 | - | - |
| | Sodium carbonate | 0.12 | - | - |
| C | n-propoxy propanol (solvent) | 180 | - | - |
| D | Vinyl toluene (co-monomer) | 180 | 46.9 | 11.4 |
| | isobutyl methacrylate (co-monomer) | 120 | 31.3 | 7.6 |
| | Acrylic acid (co-monomer) | 84 | 21.9 | 5.3 |
| | di-tert-amyl peroxide (initiator) | 12 | - | - |
| E | 28% ammonium hydroxide (base) | 64 | - | - |
| | D.I. water | 2350 | - | - |

Charge A was added to a flask equipped with a cold water condenser and nitrogen blanket and heated to 135°C. A rapid temperature rise to 171°C was noted due to heat generated by the reaction. When the temperature returned to 135°C, Charge (B) was added to a flask and the temperature was raised gradually to 230 °C. The temperature was held until the acid value was 1.7. The flask was cooled to 140°C and Charge (C) was added. At 140°C, Charge (D) was fed into a flask over a period of about 2.5 hours.

After holding at 140°C for about 1 hour, 0.75 grams of di-t-amyl peroxide was added. After holding at 140°C for 2 hours, the flask was cooled to below 100°C and Charge (E) was added. The batch was cooled to ambient temperature after mixing at 80°C. The final dispersions had nonvolatile content of 37.5%, pH value of 9.23, Brookfield viscosity of 3700 centipoises at 25°C, and acid value of 13.1.

### Comparative Examples 2 and 3. Preparation of Comparative Coating Compositions

The ingredients shown in Table 4 were combined as described below to prepare a comparative coating composition incorporating the epoxy particles of Comparative Example 2 coating composition, and Comparative Example 3 coating composition.

| Table 4: Comparative Examples 2 and 3 coating compositions | | | | |
|---|---|---|---|---|
| | Comparative Example 2 coating composition | | Comparative Example 3 coating composition | |
| Description | No hydrazide in coating composition | | No diacetone functional group in epoxy | |
| Charge | Ingredient | Grams | Ingredient | Grams |
| A | Adipic acid dihydrazide | - | Adipic acid dihydrazide | 7 |
| B | D.I. Water | 30 | D.I. Water | 30 |
| C | Diketone-modified epoxy dispersion of Example 1 (37.9 % solids by weight) | 600 | Diketone-free epoxy dispersion of Comparative Example 1 (36.9 % solids by weight) | 600 |

Charge A and Charge B were added to a beaker and heated to 80°C with a mild agitation until the mixture became clear. The prepared solutions were blended with Charge C with the agitation of 300 rpm for 30 minutes. The final coating composition of Comparative Example 2 has a nonvolatile content of 36.1, pH value of 8.49, and Brookfield viscosity of 200 centipoises at 25°C. The final coating composition of Comparative Example 3 has a nonvolatile content of 35.4, pH value of 9.11, and Brookfield viscosity of 520 centipoises at 25°C.

### Preparation of Example 3 Paint (Of the Invention). Comparative Example 4 Paint, and Comparative Example 5 Paint

Table 5 provides the compositions of Example 3 Paint, Comparative Example 4 Paint, and Comparative Example 5 Paint formulated with the Example 2 coating composition, and Comparative Examples 2 and 3 coating compositions, respectively.

| Table 5: Example 3 (Of the Invention) Paint, Comparative Examples 4 and 5 Paints | | | |
|---|---|---|---|
| | Example 3 Paint | Comparative Example 4 Paint | Comparative Example 5 Paint |
| Ingredient | kg | kg | kg |
| Common Grind | weight | weight | weight |
| Water | 57.8 | 57.8 | 57.8 |
| Coadis^{™} BR-40 (dispersant) | 3.9 | 3.9 | 3.9 |
| AMP 95 (2-amino-2-methyl-1-propanol; dispersant) | 0.8 | 0.8 | 0.8 |
| Rhodoline^{®} 4188 (wetting agent) | 1.7 | 1.7 | 1.7 |
| Carbowet^{®} GA 100 (wetting agent) | 1.2 | 1.2 | 1.2 |
| FoamStar^{®} 2436 (defoamer) | 1.0 | 1.0 | 1.0 |
| Ti-Pure^{™} R-706 (titanium dioxide; pigment) | 193.9 | 193.9 | 193.9 |

| Individual Thindowns | | | |
|---|---|---|---|
| Grind | 260.2 | 260.2 | 260.2 |
| Example 2 coating | 709.8 | - | - |
| Comparative Example 2 coating | - | 689.3 | - |
| Comparative Example 3 coating | - | - | 703.7 |
| FoamStar^{®} 2436; (defoamer) | 1.7 | 1.7 | 1.7 |
| ACTICIDE^{®} MBS (preservative) | 1.7 | 1.7 | 1.7 |
| Coapur^{™} 817W (thickener) | 5.8 | 5.8 | 5.8 |
| Coapur^{™} 2020 (thickener) | 16.5 | 16.5 | 16.5 |
| Borchi^{®} OXY-Coat 1101 (oxidative curing agent) | 2.6 | 2.6 | 2.6 |
| Water | 0 | 20.4 | 6.1 |
| TOTAL | 998.3 | 998.3 | 998.3 |
| | | | |
| Weight solids(%) | 46.8 | 46.8 | 46.8 |
| Volume Solids (%) | 34.1 | 34.1 | 34.1 |
| PVC (%) | 19.3 | 19.3 | 19.3 |
| VOC (g/L) | 100 | 100 | 100 |

TABLE 6 collects the test results of the three paints shown in Table 5 for water uptake, hardness, dirt pick up resistance and room temperature block resistance.

| Table 6: Results of paint testing | | | | | |
|---|---|---|---|---|---|
| | Water uptake (%) | Dirt pick-up resistance (ΔE) | 7 day Koenig hardness (s) | 1 day block resistance rating | 7 day block resistance rating |
| Example 3 (Of the Invention) Paint | 2.04 | 0.32 | 80 | 10 | 10 |
| Comparative Example 4 Paint | 2.07 | 0.22 | 78 | 3 | 3 |
| Comparative Example 5 Paint | 1.98 | 0.58 | 75 | 3 | 2 |

The results in Table 6 demonstrate that the current invention provides an excellent room temperature block resistance in addition to other advantageous coating properties of epoxy polymer, such as low water uptake, good hardness, and dirt pick up resistance. The novel coating composition of the current invention may broaden the use of low VOC epoxy dispersion to numerous coating applications where block resistance is important.

This second set of Examples and Comparative Examples demonstrates that the multistage epoxy acrylate diketone functionalized particles will also crosslink with diketone functionalized emulsion polymerized particles not including epoxy, thus forming a "two-component system." Thus, these examples are directed to the second embodiment waterborne dispersion.

### Example 3 (Of the Invention): Synthesis of Latex Polymer Containing Diacetone Functional Group, and No Epoxy Particles E)

577.3 parts of deionized water, 9.4 parts of Encor^{®} 9710 seed latexes, 0.2 parts of Rhodoline^{®} 635 were charged into a reactor equipped with a stirrer, reflux condensers, thermocouples, and stainless steel feed lines. After the reactor was heated to 82°C, 1.9 parts of sodium persulfate solution in 21.0 parts of water were added into the reactor. The pre-emulsified monomer mixture consisting of 233.2 parts water, 47.4 parts of Aerosol^{®} A102 (anionic surfactant; 31 wt% active content), 558.1 parts of butyl acrylate (BA), 410.8 parts of methyl methacrylate (MMA), 13.7 parts of methacrylic acid (MAA), 20.0 parts of 2-(2-oxo-1-imidazolidinyl)ethyl methacrylate (50 wt% in MMA), and 20.3 parts diacetone acrylamide (DAAM) was then fed continuously to the reactor over 230 minutes. During the monomer feed, a solution of 5.8 parts of ammonium hydroxide (28 wt%) in 18.2 parts of water was fed into the reactor separately. After 155 minutes of monomer feed, delayed oxidizer feed was begun, 0.8 parts of sodium persulfate in 18.2 parts of water was fed over 75 minutes. At the end of monomer feed, the reaction was held at 80°C for 30 minutes.

To reduce the residual monomer concentrations, 0.7 parts of tertiary butyl hydro peroxide (tBHP) and 1.0 parts of sodium metabisulfite (SMBS) were fed over 30 minutes at 80°C. At the end of the reaction, a solution of 10.2 parts of adipic acid dihydrazide (ADH) in 45.6 parts of water was added into the reaction mixture. The final pH of the latex was adjusted to 8.5 using ammonium hydroxide. The final latex has solid content of 50.1%, average particle size of 165 nm and Brookfield viscosity of 190 centipoise.

### Example 4 (Of the Invention). Preparation of Coating Composition Containing Example 3 Diketone Latex Particles and Example 1 Diketone -Modified Epoxy Dispersion

The ingredients shown in Table 7 were combined as described below to prepare the Example 4 coating composition incorporating Example 3 diketone latex particles and Example 1 diketone -modified epoxy dispersion.

| Table 7: Example 4 coating composition | | |
|---|---|---|
| Charge | Ingredients | Grams |
| A | Adipic acid dihydrazide | 4 |
| B | D.I. Water | 15 |
| C | Example 3 latex diacetone functionalized latex dispersion | 900 |
| D | Example 1 Acrylic-modified epoxy dispersions containing diketone functional group | 132 |

Charge A and Charge B were mixed in a beaker and heated to 80 °C with a mild agitation until the mixture became clear. The prepared solution, Charge C, and Charge D were blended under the agitation of 300 rpm for 30 minutes to obtain EXAMPLE 3. The final coating composition EXAMPLE 3 has a solid content of 47.6%, pH value of 8.5, and Brookfield viscosity of 100 centipoises at 25°C.

### Comparative Example 5: Synthesis of Latex Free of Diketone Functional Group

577.3 parts of deionized water, 9.4 parts of Encor 9710 seed latexes, 0.2 parts of Rhodoline 635 were charged into a reactor equipped with a stirrer, reflux condensers, thermocouples, and stainless steel feed lines. After the reactor was heated to 82°C, 1.9 parts of sodium persulfate solution in 21.0 parts of water were added into the reactor. The pre-emulsified monomer mixture consisting of 233.2 parts water, 47.4 parts of Aerosol A102 (31 wt% active content), 558.1 parts of butyl acrylate (BA), 410.8 parts of methyl methacrylate (MMA), 13.7 parts of methacrylic acid (MAA), and 20.0 parts of 2-(2-oxo-1- imidazolidinyl)ethyl methacrylate (50 wt% in MMA) was then fed continuously to the reactor over 230 minutes. During the monomer feed, a solution of 5.8 parts of ammonium hydroxide (28 wt%) in 18.2 parts of water was fed into the reactor separately. After 155 minutes of monomer feed, delayed oxidizer feed was begun, 0.8 parts of sodium persulfate in 18.2 parts of water was fed over 75 minutes. At the end of monomer feed, the reaction was held at 80°C for 30 minutes. To reduce the residual monomer concentrations, 0.7 parts of tertiary butyl hydroperoxide (tBHP) and 1.0 parts of sodium metabisulfite (SMBS) were fed over 30 minutes at 80°C. At the end of the reaction 45.6 parts of water was added into the reaction mixture. The final pH of the latex was adjusted to 8.5 using ammonium hydroxide. The final latex has solid content of 50.1%, volume average particle size of 165 nm and Brookfield viscosity of 190 centipoise.

### Comparative Example 6 Coating Composition: Blending of Comparative Example 5 Latex Free of Diketone Functional Group with Example 1 Epoxy Dispersion

The ingredients shown in Table 8 were combined as described below to prepare the Comparative Example 6 coating composition incorporating Comparative Example 5 diketone functional group free latex with Example 1 diketone -modified epoxy dispersion.

| Table 8: Comparative Example 6 Coating Composition | | |
|---|---|---|
| Charge | Ingredients | Grams |
| A | Adipic acid dihydrazide | 4 |
| B | D.I. Water | 15 |
| C | Comparative Example 5 diacetone functional group free latex | 900 |
| D | Example 1 Acrylic-modified epoxy dispersions containing diketone functional group | 132 |

Charge A and Charge B were added to a beaker and heated to 80oC with a mild agitation until the mixture became clear., then Charge C, and Charge D were added and mixed for 30 minutes with the agitation of 300 rpm. The final coating composition of Comparative Example 6 has the solid content of 47.6%, pH value of 8.5, and Brookfield viscosity of 100 centipoises at 25°C.

### Preparation of Example 5 Paint (Of the Invention), Comparative Example 7 Paint and Comparative Example 8 Paint

Table 9 provides the paint composition formulated with the inventive crosslinkable epoxy/latex coating composition of Example 4, the comparative crosslinkable latex coating composition without epoxy of Comparative Example 5, and the not crosslinkable epoxy/latex coating composition of Comparative Example 6. The VOC's of the three paints are below 10 g/L.

| Table 9 | | | |
|---|---|---|---|
| | Example 5 Paint (Of the Invention) | Comparative Example 7 Paint | Comparative Example 8 Paint |
| Ingredient | kg | kg | kg |
| Common Grind | weight | weight | weight |
| Water | 70.0 | 70.0 | 70.0 |
| Coadis^{™} BR-40 (dispersant) | 4.7 | 4.7 | 4.7 |
| AMP 95 (2-amino-2-methyl-1-propanol; dispersant) | 1.0 | 1.0 | 1.0 |
| Rhodoline^{®} 4188 (wetting agent) | 2.0 | 2.0 | 2.0 |
| Carbowet^{®} GA 100 (wetting agent) | 1.5 | 1.5 | 1.5 |
| FoamStar^{®} 2436 (defoamer) | 1.0 | 1.0 | 1.0 |
| Ti-Pure^{™} R-706 (titanium dioxide; pigment) | 235 | 235 | 235 |
| Individual Thindowns | | | |
| Grind | 315.2 | 315.2 | 315.2 |
| Example 4 coating composition (Example 3 diketone latex particles and Example 1 diketone - modified epoxy dispersion) | 562.4 | - | - |
| Example 3 latex diketone functionalized latex dispersion | - | 562.4 | - |
| Comparative Example 6 Coating Composition (Comparative Example 5 diacetone functional group free latex with Example 1 diketone -modified epoxy dispersion) | - | - | 562.4 |
| FoamStar^{®} 2436; | 2 | 2 | 2 |
| (defoamer) | | | |
| ACTICIDE^{®} MBS (preservative) | 2 | 2 | 2 |
| Coapur^{™} 817W (thickener) | 7 | 7 | 7 |
| Coapur^{™} 2020 (thickener) | 20 | 20 | 20 |
| Optifilm^{™} 400 (coalescent) | 3.8 | 3.8 | 3.8 |
| Borchi^{®} OXY-Coat 1101 (oxidative curing agent) | 0.3 | 0 | 0.3 |
| Water | 136.2 | 136.2 | 136.2 |
| Total | 1048.9 | 1048.6 | 1048.9 |
| | | | |
| Weight solids (%) | 51.7 | 51.9 | 51.7 |
| Volume solids (%) | 39.6 | 39.7 | 39.6 |
| PVC (%) | 19.2 | 19.2 | 19.2 |
| VOC (g/L) | 7.9 | 0 | 7.9 |

Table 10 and Figure 1 show the test results of the three paints prepared according to Table 9 for hardness, dirt pick up resistance and block resistance.

| Table 10 | | | | | | |
|---|---|---|---|---|---|---|
| | Dirt Pick up resistance (ΔE) (lower better) | 7 day Koenig hardness (s) (higher better) | 3 day block resistance rating (higher better) | | 7 day block resistance rating (higher better) | |
| | | | RT^{a} | ET^{b} | RT^{a} | ET^{b} |
| Example 5 Paint (Of the Invention) | 0.6 | 17 | 7 | 6 | 7 | 6 |
| Comparative Example 7 Paint | 1.0 | 9 | 0 | 1 | 0 | 2 |
| Comparative Example 8 Paint | 5.8 | 14 | 1 | 1 | 4 | 0 |
| ^{a}RT stands for room temperature; ^{b}ET stands for elevated temperature (i.e., 120°F) | | | | | | |

The results in Table 10 and Figure 1 demonstrate that the Example 5 Paint comprising the inventive two-component coating composition including both the multi-stage diketone functionalized epoxy acrylic particles and the diketone functionalized latex particles showed higher hardness, greater dirt pick-up resistance, and superior block resistance relative to the comparative examples

## Claims

1. A water-borne dispersion comprising:
A) polymeric multistage diketone-functionalized particles comprising:
a) a first-formed polymeric stage comprising, as polymerized monomers:
i) an epoxy compound comprising at least two epoxy groups, and
ii) a polyol,
wherein the epoxy groups of i) are present in a stoichiometric excess to the hydroxyl groups of ii);
b) a second-formed polymeric stage comprising:
iii) at least one fatty acid comprising at least one carbon-carbon double bond and an optional rosin; and
c) a third-formed polymeric stage comprising, as polymerized monomers:
iv) at least one ethylenically unsaturated monomer containing a carboxylic acid group, different from iii)
v) at least one ethylenically unsaturated monomer not containing a carboxylic acid group, and
vi) at least one ethylenically unsaturated monomer containing a diketone group;
B) at least one water-soluble base;
C) at least one component comprising a dihydrazide functionality; and
D) water.

2. The waterborne dispersion of claim 1, comprising as wt% of the weight of the waterborne dispersion:
10-70 wt% of A) the polymeric multi-stage diketone-functionalized particles;
0.1-10 wt% of B) the at least one water-soluble base;
0.1-15 wt% of C) the at least one component comprising a dihydrazide functionality; and
5-89.4 wt% of D) water.

3. The waterborne dispersion of claim 1 or 2, wherein the A) polymeric multi-stage diketone-functionalized particles comprise, based on the total dry weight of the A) polymeric multi-stage diketone-functionalized particles:
5-60 wt% of i) the epoxy compound;
5-40 wt% of ii) the polyol;
5-40 wt% of iii) the at least one fatty acid and the optional rosin;
1-15 wt% of iv) the at least one ethylenically unsaturated monomer containing a carboxylic acid group;
5-40 wt% of v) the at least one ethylenically unsaturated monomer not containing a carboxylic acid group; and
0.1-30 wt% of vi) the at least one ethylenically unsaturated monomer containing a diketone group.

4. The waterborne dispersion of any of claims 1 to 3, wherein the A) polymeric multi-stage diketone-functionalized particles have a volume average particle size of from 10 to 500 nm as measured by dynamic light scattering.

5. The waterborne dispersion of any of claims 1 to 4, wherein the A) polymeric multi-stage diketone-functionalized particles have a weight average molecular weight (Mw) of from 100 to 500,000 Daltons as measured by GPC chromatography.

6. The waterborne dispersion of any of claims 1 to 5, wherein the i) epoxy compound is selected from the group consisting of bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, trimethylol propane triglycidyl ether, pentaerythritol tetraglycidyl ether, trimethylol ethane triglycidyl ether, ethylene glycol diglycidyl ether, sorbitol glycidyl ethers, 2-methyl-1,3-propane diol diglycidyl ether, neopentyl glycol diglycidyl ether, 2,2,4-trimethyl pentanediol diglycidyl ether, propylene glycol diglycidyl ether, hydrogenated bisphenol A diglycidyl ether, 1,4-butanediol diglycidyl ether, 1,6-hexanediol diglycidyl ether, polyethylene glycol diglycidyl ether, polypropylene glycol diglycidyl ether, and mixtures thereof.

7. The waterborne dispersion of any of claims 1 to 6, wherein the ii) polyol is selected from the group consisting of bisphenol A, bisphenol F, bisphenol S, brominated bisphenol A, brominated bisphenol F, brominated bisphenol S, trimethylol propane, pentaerythritol, trimethylol ethane, ethylene glycol, sorbitol, 2-methyl 1,3-propane diol, neopentyl glycol, 2,2,4-trimethyl pentanediol, propylene glycol, hydrogenated bisphenol A, 1,4-butanediol, 1,6-hexanediol, 1,4-cycliohexyl dimethanol, 1,10-decanediol, 1,12-dodecanediol, polyethylene glycol, polypropylene glycol, and mixtures thereof.

8. The waterborne composition of any of claims 1 to 7, wherein the iii) at least one fatty acid is selected from the group consisting of linoleic acid, dehydrated castor fatty acid, safflower fatty acid, sunflower fatty acid, tall oil fatty acid, linseed fatty acid, tung oil fatty acid, oleic acid, conjugated linoleic acid, and mixtures thereof.

9. The waterborne composition of any of claims 1 to 8, wherein the iv) at least one ethylenically unsaturated monomer containing a carboxylic acid group is selected from the group consisting of acrylic acid, methacrylic acid, itaconic acid, and mixtures thereof.

10. The waterborne composition of any of claims 1 to 9, wherein the v) at least one ethylenically unsaturated monomer not containing a carboxylic acid group is selected from the group consisting of an alkyl (meth)acrylate monomer, vinyl monomer, styrene, alkyl substituted styrene, a mono-ethylenically unsaturated carboxylic acid monomer, phosphorous containing monomer, sulfur containing monomer, and mixtures thereof.

11. The waterborne composition of any of claims 1 to 10, wherein the vi) at least one ethylenically unsaturated monomer containing a diketone group is selected from the group consisting of diacetone acrylamide, diacetone methacrylamide, and mixtures thereof.

12. The waterborne composition of any of claims 1 to 11, wherein the pH of the composition is from 7 to 11.

13. The waterborne composition of any of claims 1 to 12, wherein the C) at least one component comprising a dihydrazide functionality is selected from the group consisting of adipic acid dihydrazide, succinic dihydrazide, and mixtures thereof.

14. The waterborne dispersion of any of claims 1 to 13, further comprising:
E) polymeric diketone-functionalized particles different from particles A),
comprising, as polymerized monomers:
vii) at least one ethylenically unsaturated monomer, and
viii) at least one ethylenically unsaturated monomer containing a diketone group.

15. The waterborne dispersion of claim 14, comprising:
0.1-30 wt% of A) the polymeric multi-stage diketone-functionalized particles;
0.01-5 wt% of B) the at least one water-soluble base;
0.1- 5 wt% of C) the at least one component comprising a dihydrazide functionality;
5-79.4 wt% of D) water; and
20-70 wt% of E) the polymeric diketone-functionalized particles different from particles A).

16. The waterborne dispersion of claim 14 or 15, wherein the vii) at least one ethylenically unsaturated monomer is selected from the group consisting of methyl methacrylate, butyl acrylate, 2-ethylhexyl acrylate, styrene, methacrylic acid, acrylic acid, and mixtures thereof.

17. The waterborne dispersion of any of claims 14 to 16, wherein the viii) at least one ethylenically unsaturated monomer containing a diketone group is selected from the group consisting of diacetone acrylamide, diacetone methacrylamide, and mixtures thereof.

18. A method for forming a waterborne dispersion, wherein the method comprises the steps of:
combining:
i) an epoxy compound comprising at least two epoxy groups, and
ii) a polyol, to form a first monomer mixture,
wherein the epoxy groups of i) are in present in a stoichiometric excess to the hydroxyl groups of ii);
initiating:
a reaction of the first monomer mixture to form a first polymeric stage;
combining:
the first polymeric stage, and
iii) at least one fatty acid comprising at least one carbon-carbon double bond to form a second monomer mixture;
initiating:
a reaction of the second monomer mixture to form a second polymeric stage;
combining:
iv) at least one ethylenically unsaturated monomer containing a carboxylic acid group,
v) at least one ethylenically unsaturated monomer not containing a carboxylic acid group,
vi) at least one ethylenically unsaturated monomer containing a diketone group, and the second polymeric stage, to form a third monomer mixture;
initiating:
a reaction of the third monomer mixture to form a diketone-functionalized epoxy acrylic polymer; and
adding:
water and a water soluble base to the multi-stage diketone-functionalized epoxy
acrylic polymer to form diketone functionalized epoxy acrylic particles;
combining:
the diketone functionalized epoxy acrylic particles with at least one component comprising a dihydrazide functionality to form the waterborne dispersion.

19. The method of claim 18, further comprising a step of
adding:
polymeric diketone-functionalized particles different from the diketone functionalized epoxy acrylic particles,
the polymeric diketone-functionalized particles comprising, as polymerized monomers:
vii) at least one ethylenically unsaturated monomer, and
viii) at least one ethylenically unsaturated monomer containing a diketone group.

20. A coating composition comprising:
the waterborne dispersion of any of claims 1 to 17 and at least one additive.

21. A coating composition, paint composition, ink composition and/or adhesive composition comprising the waterborne dispersion of any of claims 1 to 17.

22. A coated substrate comprising a substrate coated with the coating composition, paint composition, ink composition and/or adhesive composition of claim 21 in dried form, wherein the substrate is selected from the group consisting of metal, asphalt, concrete, stone, ceramic, wood, plastic, polymer, rail cars, agricultural machinery, automobile parts, log cabins, decks, industrial surfaces, interior surfaces, automotive surfaces, exterior surfaces, agricultural machinery, residential housing, and combinations thereof.

## Patentansprüche

1. Dispersion auf Wasserbasis, umfassend:
A) polymere mehrstufige diketonfunktionalisierte Partikel umfassend:
a) eine zuerst gebildete Polymerstufe, die als polymerisierte Monomere umfasst:
i) eine Epoxyverbindung, die wenigstens zwei Epoxygruppen umfasst, und
ii) ein Polyol,
wobei die Epoxygruppen von i) in einem stöchiometrischen Überschuss gegenüber den Hydroxygruppen von ii) vorhanden sind;
b) eine als zweites gebildete Polymerstufe umfassend:
iii) wenigstens eine Fettsäure, die wenigstens eine Kohlenstoff-Kohlenstoff-Doppelbindung und ein optionales Kolophonium umfasst; und
c) eine als drittes gebildete Polymerstufe, die als polymerisierte Monomere umfasst:
iv) wenigstens ein ethylenisch ungesättigtes Monomer mit einer Carbonsäuregruppe, das von iii) verschieden ist,
v) wenigstens ein ethylenisch ungesättigtes Monomer, das keine Carbonsäuregruppe enthält, und
vi) wenigstens ein ethylenisch ungesättigtes Monomer, das eine Diketongruppe enthält;
B) wenigstens eine wasserlösliche Base;
C) wenigstens eine Komponente, die eine Dihydrazidfunktionalität umfasst; und
D) Wasser.

2. Dispersion auf Wasserbasis nach Anspruch 1, umfassend als Gew.-% des Gewichts der Dispersion auf Wasserbasis:
10-70 Gew.-% an A) den polymeren mehrstufigen diketonfunktionalisierten Partikeln;
0,1-10 Gew.-% an B) der wenigstens einen wasserlöslichen Base;
0,1-15 Gew.-% an C) der wenigstens einen Komponente, die eine Dihydrazidfunktionalität umfasst; und
5-89,4 Gew.-% D) Wasser.

3. Dispersion auf Wasserbasis nach Anspruch 1 oder 2, wobei die A) polymeren mehrstufigen diketonfunktionalisierten Partikel, bezogen auf das Gesamttrockengewicht der A) polymeren mehrstufigen diketonfunktionalisierten Partikel, umfassen:
5-60 Gew.-% an i) der Epoxyverbindung;
5-40 Gew.-% an ii) dem Polyol;
5-40 Gew.-% an iii) der wenigstens einen Fettsäure und dem optionalen Kolophonium;
1-15 Gew.-% an iv) dem wenigstens einen ethylenisch ungesättigten Monomer, das eine Carbonsäuregruppe enthält;
5-40 Gew.-% an v) dem wenigstens einen ethylenisch ungesättigten Monomer, das keine Carbonsäuregruppe enthält; und
0,1-30 Gew.-% an vi) dem wenigstens einen ethylenisch ungesättigten Monomer, das eine Diketongruppe enthält.

4. Dispersion auf Wasserbasis nach einem der Ansprüche 1 bis 3, wobei die A) polymeren mehrstufigen diketonfunktionalisierten Partikel eine volumengemittelte Partikelgröße von 10 bis 500 nm, wie durch dynamische Lichtstreuung gemessen, aufweisen.

5. Dispersion auf Wasserbasis nach einem der Ansprüche 1 bis 4, wobei die A) polymeren mehrstufigen diketonfunktionalisierten Partikel ein gewichtsgemitteltes Molekulargewicht (Mw) von 100 bis 500.000 Dalton, wie durch GPC-Chromatographie gemessen, aufweisen.

6. Dispersion auf Wasserbasis nach einem der Ansprüche 1 bis 5, wobei die i) Epoxyverbindung ausgewählt ist aus der Gruppe bestehend aus Bisphenol-A-diglycidylether, Bisphenol-F-diglycidylether, Bisphenol-S-diglycidylether, bromiertem Bisphenol-A-diglycidylether, bromiertem Bisphenol-F-diglycidylether, bromiertem Bisphenol-S-diglycidylether, Trimethylolpropantriglycidylether, Pentaerythrittetraglycidylether, Trimethylolethantriglycidylether, Ethylenglycoldiglycidylether, Sorbitglycidylether, 2-Methyl-1,3-propandioldiglycidylether, Neopentylglycoldiglycidylether, 2,2,4-Trimethylpentandioldiglycidylether, Propylenglycoldiglycidylether, hyderiertem Bisphenol-A-diglycidylether, 1,4-Butandioldiglycidylether, 1,6-Hexandioldiglycidylether, Polyethylenglycoldiglycidylether, Polypropylenglycoldiglycidylether und Gemischen davon.

7. Dispersion auf Wasserbasis nach einem der Ansprüche 1 bis 6, wobei das ii) Polyol ausgewählt ist aus der Gruppe bestehend aus Bisphenol A, Bisphenol F, Bisphenol S, bromiertem Bisphenol A, bromiertem Bisphenol F, bromiertem Bisphenol S, Trimethylolpropan, Pentaerythrit, Trimethylolethan, Ethylenglycol, Sorbit, 2-Methyl-1,3-propandiol, Neopentylglycol, 2,2,4-Trimethylpentandiol, Propylenglycol, hydriertem Bisphenol A, 1,4-Butandiol, 1,6-Hexandiol, 1,4-Cycliohexyldimethanol, 1,10-Decandiol, 1,12-Dodecandiol, Polyethylenglycol, Polypropylenglycol und Gemischen davon.

8. Zusammensetzung auf Wasserbasis nach einem der Ansprüche 1 bis 7, wobei die iii) wenigstens eine Fettsäure ausgewählt ist aus der Gruppe bestehend aus Linolsäure, dehydratisierter Rizinusfettsäure, Saflorfettsäure, Sonnenblumenfettsäure, Tallölfettsäure, Leinölfettsäure, Tungölfettsäure, Ölsäure, konjugierter Linolsäure und Gemischen davon.

9. Zusammensetzung auf Wasserbasis nach einem der Ansprüche 1 bis 8, wobei das iv) wenigstens eine ethylenisch ungesättigte Monomer, das eine Carbonsäuregruppe enthält, ausgewählt ist aus der Gruppe bestehend aus Acrylsäure, Methacrylsäure, Itaconsäure und Gemischen davon.

10. Zusammensetzung auf Wasserbasis nach einem der Ansprüche 1 bis 9, wobei das v) wenigstens eine ethylenisch ungesättigte Monomer, das keine Carbonsäuregruppe enthält, ausgewählt ist aus der Gruppe bestehend aus einem Alkyl(meth)acrylatmonomer, Vinylmonomer, Styrol, alkylsubstituiertem Styrol, einem monoethylenisch ungesättigten Carbonsäuremonomer, einem phosphorhaltigen Monomer, einem schwefelhaltigen Monomer und Gemischen davon.

11. Zusammensetzung auf Wasserbasis nach einem der Ansprüche 1 bis 10, wobei das vi) wenigstens eine ethylenisch ungesättigtes Monomer, das eine Diketongruppe enthält, ausgewählt ist aus der Gruppe bestehend aus Diacetonacrylamid, Diacetonmethacrylamid und Gemischen davon.

12. Zusammensetzung auf Wasserbasis nach einem der Ansprüche 1 bis 11, wobei der pH-Wert der Zusammensetzung von 7 bis 11 beträgt.

13. Zusammensetzung auf Wasserbasis nach einem der Ansprüche 1 bis 12, wobei die C) wenigstens eine Komponente, die eine Dihydrazidfunktionalität umfasst, ausgewählt ist aus der Gruppe bestehed aus Adipinsäuredihydrazid, Bernsteinsäuredihydrazid und Gemischen davon.

14. Dispersion auf Wasserbasis nach einem der Ansprüche 1 bis 13, ferner umfassend:
E) polymere diketonfunktionalisierte Partikel, die von den Partikeln A) verschieden sind, umfassend als polymerisierte Monomere:
vii) wenigstens ein ethylenisch ungesättigtes Monomer, und
viii) wenigstens ein ethylenisch ungesättigtes Monomer, das eine Diketongruppe enthält.

15. Dispersion auf Wasserbasis nach Anspruch 14, umfassend:
0,1-30 Gew.-% an A) den polymeren mehrstufigen diketonfunktionalisierten Partikeln;
0,01-5 Gew.-% an B) der wenigstens einen wasserlöslichen Base;
0,1-5 Gew.-% an C) der wenigstens einen Komponente, die eine Dihydrazidfunktionalität umfasst;
5-79,4 Gew.-% D) Wasser; und
20-70 Gew.-% an E) den polymeren diketonfunktionalisierten Partikeln, die von den Partikeln A) verschieden sind.

16. Dispersion auf Wasserbasis nach Anspruch 14 oder 15, wobei das vii) wenigstens ein ethylenisch ungesättigte Monomer ausgewählt ist aus der Gruppe bestehend aus Methylmethacrylat, Butylacrylat, 2-Ethylhexylacrylat, Styrol, Methacrylsäure, Acrylsäure und Gemischen davon.

17. Dispersion auf Wasserbasis nach einem der Ansprüche 14 bis 16, wobei das viii) wenigstens ein ethylenisch ungesättigte Monomer, das eine Diketongruppe enthält, ausgewählt ist aus der Gruppe bestehend aus Diacetonacrylamid, Diacetonmethacrylamid und Gemischen davon.

18. Verfahren zum Bilden einer Dispersion auf Wasserbasis, wobei das Verfahren die Schritte umfasst:
Kombinieren:
i) eine Epoxyverbindung, die wenigstens zwei Epoxygruppen umfasst, und
ii) ein Polyol, um ein erstes Monomergemisch zu bilden, wobei die Epoxygruppen von i) in einem stöchiometrischen Überschuss gegenüber den Hydroxygruppen von ii) vorhanden sind;
Auslösen:
einer Reaktion des ersten Monomergemischs, um eine erste Polymerstufe zu bilden;
Kombinieren:
der ersten Polymerstufe und
iii) wenigstens einer Fettsäure, die wenigstens eine Kohlenstoff-Kohlenstoff-Doppelbindung umfasst, um ein zweites Monomergemisch zu bilden;
Auslösen:
einer Reaktion des zweiten Monomergemischs, um eine zweite Polymerstufe zu bilden;
Kombinieren:
iv) wenigstens ein ethylenisch ungesättigtes Monomer, das eine Carbonsäuregruppe enthält,
v) wenigstens ein ethylenisch ungesättigtes Monomer, das keine Carbonsäuregruppe enthält,
vi) wenigstens ein ethylenisch ungesättigtes Monomer, das eine Diketongruppe enthält, und die zweite Polymerstufe, um ein drittes Monomergemisch zu bilden;
Auslösen:
einer Reaktion des dritten Monomergemischs, um ein diketonfunktionalisiertes Epoxyacrylpolymer zu bilden;
und
Zugeben:
Wasser und eine wasserlösliche Base zu dem mehrstufigen diketonfunktionalisierten Epoxyacrylpolymer, um diketonfunktionalisierte Epoxyacrylpartikel zu bilden;
Kombinieren:
die diketonfunktionalisierten Epoxyacrylpartikel mit wenigstens einer Komponente, die eine Dihydrazidfunktionalität umfasst, um die Dispersion auf Wasserbasis zu bilden.

19. Verfahren nach Anspruch 18, ferner umfassend einen Schritt des Zugebens:
polymere diketonfunktionalisierte Partikel, die von den diketonfunktionalisierten Epoxyacrylpartikeln verschieden sind,
wobei die polymeren diketonfunktionalisierten Partikel als polymerisierte Monomere umfassen:
vii) wenigstens ein ethylenisch ungesättigtes Monomer, und
viii) wenigstens ein ethylenisch ungesättigtes Monomer, das eine Diketongruppe enthält.

20. Beschichtungszusammensetzung umfassend:
die Dispersion auf Wasserbasis nach einem der Ansprüche 1 bis 17 und wenigstens einen Zusatzstoff.

21. Beschichtungszusammensetzung, Anstrichzusammensetzung, Tintenzusammensetzung und/oder Klebstoffzusammensetzung umfassend die Dispersion auf Wasserbasis nach einem der Ansprüche 1 bis 17.

22. Beschichtetes Substrat, umfassend ein Substrat, das mit der Beschichtungszusammensetzung, der Lackzusammensetzung, der Tintenzusammensetzung und/oder der Klebstoffzusammensetzung nach Anspruch 21 in getrockneter Form beschichtet ist, wobei das Substrat ausgewählt ist aus der Gruppe bestehend aus Metall, Asphalt, Beton, Stein, Keramik, Holz, Kunststoff, Polymer, Schienenfahrzeugen, landwirtschaftlichen Maschinen, Automobilteilen, Blockhäusern, Decks, industriellen Oberflächen, Innenoberflächen, Automobiloberflächen, Außenoberflächen, landwirtschaftlichen Maschinen, Wohnhäusern und Kombinationen davon.

## Revendications

1. Dispersion aqueuse comprenant :
A) des particules polymériques fonctionnalisées par une dicétone à étapes multiples comprenant :
a) une première étape polymérique formée comprenant, comme monomères polymérisés :
i) un composé époxy comprenant au moins deux groupes époxy, et
ii) un polyol,
dans laquelle les groupes époxy de i) sont présents en un excès stœchiométrique par rapport aux groupes hydroxyle de ii) ;
b) une deuxième étape polymérique formée comprenant :
iii) au moins un acide gras comprenant au moins une double liaison carbone-carbone et une colophane éventuelle ; et
c) une troisième étape polymérique formée comprenant, en tant que monomères polymérisés :
iv) au moins un monomère éthyléniquement insaturé contenant un groupe acide carboxylique, différent de iii)
v) au moins un monomère éthyléniquement insaturé ne contenant pas de groupe acide carboxylique et
vi) au moins un monomère éthyléniquement insaturé et contenant un groupe dicétone ;
B) au moins une base hydrosoluble ;
C) au moins un composant comprenant une fonctionnalité dihydrazide ; et
D) de l'eau.

2. Dispersion aqueuse selon la revendication 1, comprenant en % en poids du poids de la dispersion aqueuse :
10-70 % en poids de A) les particules polymériques fonctionnalisées par une dicétone à étapes multiples ;
0,1-10 % en poids de B) la au moins une base hydrosoluble ;
0,1-15 % en poids de C) l'au moins un composant comprenant une fonctionnalité dihydrazide ; et
5-89,4 % en poids de D) l'eau.

3. Dispersion aqueuse selon la revendication 1 ou 2, dans laquelle les A) particules polymériques fonctionnalisées par une dicétone à étapes multiples comprennent, sur la base du poids sec total des A) particules polymériques fonctionnalisées par une dicétone à étapes multiples :
5-60 % en poids du i) composé époxy ;
5-40 % en poids du ii) polyol ;
5-40 % en poids de iii) l'au moins un acide gras et l'éventuelle colophane ;
1-15 % en poids de iv) l'au moins un monomère éthyléniquement insaturé contenant un groupe acide carboxylique ;
5-40 % en poids de v) l'au moins un monomère éthyléniquement insaturé ne contenant pas de groupe acide carboxylique ; et
0,1-30 % en poids de vi) au moins un monomère éthyléniquement insaturé contenant un groupe dicétone.

4. Dispersion aqueuse selon l'une quelconque des revendications 1 à 3, dans laquelle les A) particules polymériques fonctionnalisées par une dicétone à étapes multiples ont une taille moyenne de particule en volume de 10 à 500 nm, comme mesurée par diffusion dynamique de la lumière.

5. Dispersion aqueuse selon l'une quelconque des revendications 1 à 4, dans laquelle les A) particules polymériques fonctionnalisées par une dicétone à étapes multiples ont un poids moléculaire moyen en poids (Mw) de 100 à 500 000 Daltons comme mesuré par chromatographie GPC.

6. Dispersion aqueuse selon l'une quelconque des revendications 1 à 5, dans laquelle le i) composé époxy est choisi dans le groupe constitué par l'éther diglycidylique du bisphénol A, l'éther diglycidylique du bisphénol F, l'éther diglycidylique du bisphénol S, l'éther diglycidylique du bisphénol A bromé, l'éther diglycidylique du bisphénol F bromé, l'éther diglycidylique du bisphénol S bromé, l'éther triglycidylique du triméthylol propane, l'éther tétraglycidylique du pentaérythritol, l'éther triglycidylique du triméthylol éthane, l'éther diglycidylique de l'éthylène glycol, les éthers glycidyliques du sorbitol, l'éther diglycidylique du 2-méthyl-1,3-propane diol, l'éther diglycidylique du néopentyl glycol, l'éther diglycidylique du 2,2,4-triméthyl pentanediol, l'éther diglycidylique du propylène glycol, l'éther diglycidylique du bisphénol A hydrogéné, l'éther diglycidylique du 1,4-butanediol, l'éther diglycidylique du 1,6-hexanediol, un éther diglycidylique de polyéthylèneglycol, un éther diglycidylique de polypropylèneglycol et leurs mélanges.

7. Dispersion aqueuse selon l'une quelconque des revendications 1 à 6, dans laquelle le ii) polyol est choisi dans le groupe constitué par le bisphénol A, le bisphénol F, le bisphénol S, le bisphénol A bromé, le bisphénol F bromé, le bisphénol S bromé, le triméthylol propane, le pentaérythritol, le triméthylol éthane, l'éthylène glycol, le sorbitol, le 2-méthyl 1,3-propane diol, le néopentyl glycol, le 2,2,4-triméthyl pentanediol, le propylène glycol, le bisphénol A hydrogéné, le 1,4-butanediol, le 1,6-hexanediol, le 1,4-cycliohexyl diméthanol, le 1,10-décanediol, le 1,12-dodécanediol, un polyéthylèneglycol, un polypropylèneglycol, et leurs mélanges.

8. Composition aqueuse selon l'une quelconque des revendications 1 à 7, dans laquelle le iii) au moins un acide gras est choisi dans le groupe constitué par l'acide linoléique, l'acide gras de ricin déshydraté, l'acide gras de carthame, l'acide gras de tournesol, l'acide gras de tallöl, l'acide gras de lin, l'acide gras d'huile de tung, l'acide oléique, l'acide linoléique conjugué et leurs mélanges.

9. Composition aqueuse selon l'une quelconque des revendications 1 à 8, dans laquelle le iv) au moins un monomère éthyléniquement insaturé contenant un groupe acide carboxylique est choisi dans le groupe constitué par l'acide acrylique, l'acide méthacrylique, l'acide itaconique et leurs mélanges.

10. Composition aqueuse selon l'une quelconque des revendications 1 à 9, dans laquelle le v) au moins un monomère éthyléniquement insaturé ne contenant pas de groupe acide carboxylique est choisi dans le groupe constitué par un monomère de (méth)acrylate d'alkyle, un monomère vinylique, le styrène, le styrène substitué par alkyle, un monomère d'acide carboxylique mono-éthyléniquement insaturé, un monomère contenant du phosphore, un monomère contenant du soufre et leurs mélanges.

11. Composition aqueuse selon l'une quelconque des revendications 1 à 10, dans laquelle le vi) au moins un monomère éthyléniquement insaturé contenant un groupe dicétone est choisi dans le groupe constitué par le diacétone acrylamide, le diacétone méthacrylamide et leurs mélanges.

12. Composition aqueuse selon l'une quelconque des revendications 1 à 11, dans laquelle le pH de la composition est de 7 à 11.

13. Composition aqueuse selon l'une quelconque des revendications 1 à 12, dans laquelle le C) au moins un composant comprenant une fonctionnalité dihydrazide est choisi dans le groupe constitué par le dihydrazide d'acide adipique, le dihydrazide succinique et leurs mélanges.

14. Dispersion aqueuse selon l'une quelconque des revendications 1 à 13, comprenant en outre :
E) des particules polymériques fonctionnalisées par une dicétone différentes des particules A), comprenant comme monomères polymérisés :
vii) au moins un monomère éthyléniquement insaturé, et
viii) au moins un monomère éthyléniquement insaturé contenant un groupe dicétone.

15. Dispersion aqueuse selon la revendication 14, comprenant :
0,1-30 % en poids de A) les particules polymériques fonctionnalisées par une dicétone à étapes multiples ;
0,01-5 % en poids de B) la au moins une base hydrosoluble ;
0,1-5 % en poids de C) l'au moins un composant comprenant une fonctionnalité dihydrazide ;
5-79,4 % en poids de D) l'eau ; et
20-70 % en poids de E) les particules polymériques fonctionnalisées par une dicétone différentes des particules A).

16. Dispersion aqueuse selon la revendication 14 ou 15, dans laquelle le vii) au moins un monomère éthyléniquement insaturé est choisi dans le groupe constitué par le méthacrylate de méthyle, l'acrylate de butyle, l'acrylate de 2-éthylhexyle, le styrène, l'acide méthacrylique, l'acide acrylique, et leurs mélanges.

17. Dispersion aqueuse selon l'une quelconque des revendications 14 à 16, dans laquelle le viii) au moins un monomère éthyléniquement insaturé contenant un groupe dicétone est choisi dans le groupe constitué par le diacétone acrylamide, le diacétone méthacrylamide et leurs mélanges.

18. Procédé de formation d'une dispersion aqueuse, le procédé comprenant les étapes de :
combinaison de :
i) un composé époxy comprenant au moins deux groupes époxy, et
ii) un polyol, pour former un premier mélange de monomères,
dans lequel les groupes époxy de i) sont présents en un excès stœchiométrique par rapport aux groupes hydroxyle de ii) ;
initiation de :
une réaction du premier mélange de monomères pour former une première étape polymérique ;
combinaison de :
la première étape polymérique, et de
iii) au moins un acide gras comprenant au moins une double liaison carbone-carbone pour former un second mélange de monomères ;
initiation de :
une réaction du deuxième mélange de monomères pour former une deuxième étape polymérique ;
combinaison de :
iv) au moins un monomère éthyléniquement insaturé contenant un groupe acide carboxylique,
v) au moins un monomère éthyléniquement insaturé ne contenant pas de groupe acide carboxylique,
vi) au moins un monomère éthyléniquement insaturé contenant un groupe dicétone, et la deuxième étape polymérique, pour former un troisième mélange de monomères ;
initiation de :
une réaction du troisième mélange de monomères pour former un polymère époxy acrylique fonctionnalisé par une dicétone ; et
ajout de :
eau et d'une base hydrosoluble au polymère époxy acrylique fonctionnalisé par une dicétone à étapes multiples pour former des particules époxy acryliques fonctionnalisées par une dicétone ;
combinaison de :
particules époxy acryliques fonctionnalisées par une dicétone avec au moins un composant comprenant une fonctionnalité dihydrazide pour former la dispersion aqueuse.

19. Procédé selon la revendication 18, comprenant en outre une étape d'ajout de :
particules polymériques fonctionnalisées par une dicétone différentes des particules époxy acryliques fonctionnalisées par une dicétone,
les particules polymériques fonctionnalisées par une dicétone, comprenant comme monomères polymérisés :
vii) au moins un monomère éthyléniquement insaturé, et
viii) au moins un monomère éthyléniquement insaturé contenant un groupe dicétone.

20. Composition de revêtement comprenant :
la dispersion aqueuse selon l'une quelconque des revendications 1 à 17 et au moins un additif.

21. Composition de revêtement, composition de peinture, composition d'encre et/ou composition d'adhésif comprenant la dispersion aqueuse selon l'une quelconque des revendications 1 à 17.

22. Substrat revêtu comprenant un substrat revêtu par la composition de revêtement, la composition de peinture, la composition d'encre et/ou la composition d'adhésif selon la revendication 21, sous forme séchée, dans lequel le substrat est choisi dans le groupe constitué par le métal, l'asphalte, le béton, la pierre, la céramique, le bois, le plastique, le polymère, les wagons de chemin de fer, les machines agricoles, les pièces automobiles, les cabanes en rondins, les terrasses, les surfaces industrielles, les surfaces intérieures, les surfaces d'automobiles, les surfaces extérieures, les machines agricoles, les logements résidentiels et leurs combinaisons.
